(19) **Europäisches Patentamt**
**European Patent Office**
**Office européen des brevets**

(11) **EP 2 023 530 A1**

(12) **EUROPEAN PATENT APPLICATION**
published in accordance with Art. 153(4) EPC

(43) Date of publication:
**11.02.2009 Bulletin 2009/07**

(51) Int Cl.:
*H04L 9/32* (2006.01)   *G09C 1/00* (2006.01)

(21) Application number: **07743575.8**

(22) Date of filing: **17.05.2007**

(86) International application number:
**PCT/JP2007/060140**

(87) International publication number:
**WO 2007/138876 (06.12.2007 Gazette 2007/49)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **01.06.2006 JP 2006153774
20.04.2007 JP 2007111384**

(71) Applicant: **NEC Corporation
Minato-ku
Tokyo 108-8001 (JP)**

(72) Inventors:
• **TAGUCHI, Daigo
Tokyo; 108-8001 (JP)**
• **NODA, Jun
Tokyo; 108-8001 (JP)**

(74) Representative: **Betten & Resch
Patentanwälte
Theatinerstrasse 8
(Fünf Höfe)
80333 München (DE)**

(54) **COMMUNICATION NODE AUTHENTICATION SYSTEM AND METHOD, AND COMMUNICATION NODE AUTHENTICATION PROGRAM**

(57)    [PROBLEMS] When two communication nodes communicate with each other they more reliably confirm that the communication party is a correct one. [MEANS FOR SOLVING PROBLEMS] Commutation is performed on the basis of a first communication identifier created by a second communication node and contained in a first authentication message replied to the first communication node in response to a connection request message transmitted from the first to the second communication node, authenticator data held in the first communication node, and a second communications identifier created by the first communication node so as to create a message different from the other messages each time, creatable easily from the authenticator data, identifiable as a message created in response to the first authentication message, and not easy to derive or deduce authenticates data from this message. The second authentication message is checked.

FIG. 1

**Description**

TECHNICAL FIELD

The present invention relates to a communication node authentication device and method as well as a communication node authentication program for giving authentication regarding a connection between communication nodes. More specifically, the present invention relates to a communication node authentication device and method as well as a communication node authentication program used for radio communication nodes that are to be operated for a long time with limited power supply resources such as batteries.

BACKGROUND ART

Patent Document 1 discloses an example of a related communication node authentication method. The communication node authentication method depicted in Patent Document 1 regards to a home network configured with at least one communicable device and a home server for controlling the device, and the method includes: a step which generates, with the home server, an authentication key based on inherent information of the device that is managed by the home server and an authentication value generated by using the inherent information, and transmits the generated authentication key to the device along with the inherent information of the device; a step which compares a value transmitted from the device with the authentication value; and a step which authenticates the device that has sent the value, when the value transmitted from the device matches the authentication value.

Further, Patent Document 1 also discloses an authentication method as a method for the devices configuring the home network to receive authentication by requesting it to the home server. This authentication method includes: a step which generates an authentication value based on an authentication key extracted from information transmitted from the home server and inherent information managed by the device; and a step which transmits the generated authentication value to the home server and receives information regarding an authentication result from the home server.

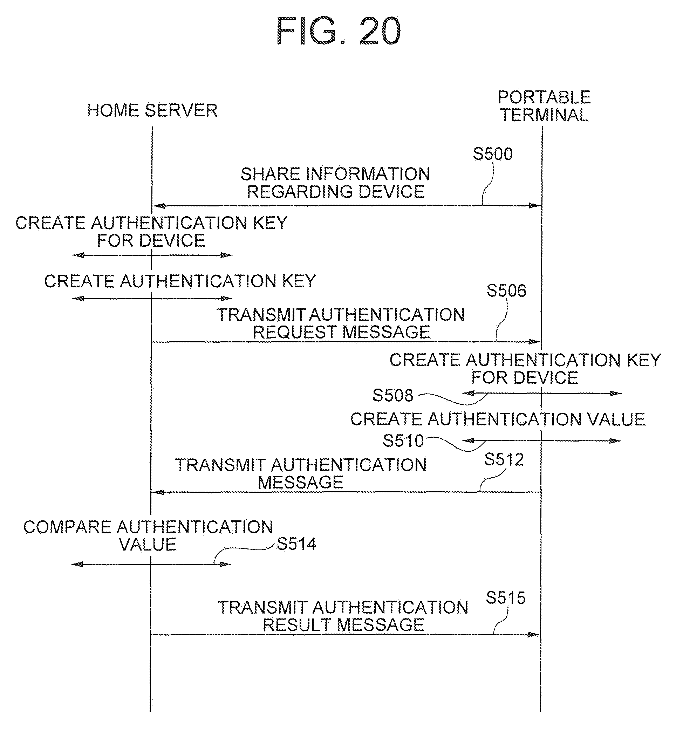

A communication node to which such communication node authentication method is applied operates as follows. As shown in FIG. 20, in step S500, the home server shares information such as group identifiers, device identifiers, address information, and device secret keys for each of the devices with the respective devices. The home server acknowledges the device secret key and the address information for the corresponding device by using the shared information. The group identifiers are set by considering device environment, position, functions, and the like.

In step S502, the home server generates the authentication key for the corresponding device by using the acknowledged device secret key, the address information, and the authentication value of the device. The authentication value of the device is a single value generated for a single group or a value generated individually for each device in order to manage the devices configuring the home network by each group. Further, the authentication key is generated by performing an exclusive-OR operation by using the device secret key, the device authentications value, and the address information, for example.

In step S504, the home server generates an authentication key message. The authentications key message is configured with the group identifier, the device identifier, the device authentication key (authentication key), random information, and the like. In step S506, the home server transmits the generated authentication key message to the corresponding device. The authentication key message may also be called an authentication request message, since it also functions as a message for requesting authentication for the device.

In step S508, the device generates the device authentication key that is allotted to the device itself, by using the received authentication request message, and the device secret key and the address information which are managed by the device itself by being stored in a prescribed storage device provided inside or outside the device.

In step S510, the device generates the authentication value by performing a hash operation by using the generated device authentication key and the information related to authentication. The information related to authentication means the information shared by the home server and the device, e,g., the address information, the device secret key, and the random information. In step S512, the device transmits the generated authentication value including the authentication message to the home server.

In step S514, the home server compares the transmitted authentication value and the generated authentication value for the corresponding device by using the information of the corresponding device, which is managed by itself through storing it to the storage device provided inside or outside the home server. When both values are found to be the same as a result of the comparison, it is considered that authentication is succeeded. When the values are different, it is considered that authentication is failed. In step S516, the information regarding the authentication result including an authentication result message is transmitted to the corresponding device.

Patent Document 1: Japanese Unexamined Patent Publication 2005-196790 (paragraphs 0040 - 0043, FIG. 5)

DISCLOSURE OF THE INVENTION

However, with a one-way authentication method such as the communication node authentication method depicted in Patent Document 1 with which connection is permitted through having a given communication node B (corresponds to the device) perform processing to receive authentication in response to an authentication request message from another communication node A (corresponds to the home server), it is not possible to check whether or not the communication node that has issued the authentication request message is a proper node. Therefore, the communication node B may respond to the authentication request message from the illegitimate communication node A and permit connection with the illegitimate communication node A, so that it is possible that information is leaked to the illegitimate communication node A from the communication node B.

Even if the communication node B also performs the same authentication sequence for the communication node A that is the sender of the authentication request, it is not possible to counteract attacks by spoof communication nodes, etc., unless the continuity between the two authentication sequences performed in both directions can be secured.

It is an object of the present invention to provide a communication node authentication device and method as well as a communication node authentication program, with which a given node itself and another communication node as a communication partner can more securely confirm that the both communication nodes are the proper communication nodes for each other when the communication nodes communicate with each other.

Further, it is an object of the present invention to achieve mutual authentications while suppressing consumption of the power supply resource, so that it can be applied to radio communication nodes that are operated for a long time by limited power supply resources such as batteries.

In order to achieve the foregoing objects, the communication node authentication system according to the present invention is a communication node authentication system which starts a communication between communication nodes after performing authentications while having a transmitter-side communication node as one side and a receiver-side communication node as another for communicating with each other, wherein:

the receiver-side communication node includes
a first authentication message creating device which creates a first authentications message in response to a connection request message that is transmitted from the transmitter-side communication node, and
a second authentication message checking device which verifies a second authentication message that is transmitted from the transmitter-side communication node; and
the transmitter-side communication node includes
a first authentication message checking device which verifies the first authentication message that is transmitted from the receiver-side communication node, and
a second authentication message creating device which creates the second authentication message based on a verification result obtained by the first authentication message checking device.

In the explanations above, the present invention is built as a communication node system. However, the present invention is not limited only to such case. The present invention may also be built as a communication node authentication device, a communication node authentication method, and a communication node authentication program used for the communication node system.

The communication node authentication device according to the present invention is a communication node authentication device used for a communication node system which starts communication between communication nodes after performing authentications. The device includes:

a first authentication message creating device which creates a first authentication message in response to a connection request message that is transmitted from a communication node to be a transmitter side; and
a second authentication message checking device which verifies a second authentication message that is transmitted from the communication node to be the transmitter side.

The communication node authentication device according to the present invention is a communication node authentication device used for a communication node system which starts communication between communication nodes after performing authentications. The device includes:

a first authentication message checking device which verifies the first authentication message that is transmitted from a communication node to be a receiver side; and
a second authentication message creating device which creates a second authentication message for authenticating a transmitter-side communication node based on a verification result obtained by the first authentication message checking device.

The communication node authentication method according to the present invention is a communication node authentication method which starts a communication between communication nodes after performing authentications while having a transmitter-side communication node as one side and a receiver-side communication node as another for communicating with each other, wherein:

the receiver-side communication node executes processing for creating a first authentication message in response to a connection request message transmitted from the transmitter-side communication node;
the transmitter-side communication node executes processing for verifying the first authentication message that is transmitted from the receiver-side communication node, and processing for creating a second authentication message based on a verification result of the first authentication message; and
the receiver-side communication node executes processing for verifying the second authentication message that is transmitted from the transmitter-side communication node.

The communication node authentication program according to the present invention is a communication node authentication program for starting a communication between communication nodes after performing authentications while having a transmitter-side communication node as one side and a receiver-side communication node as another for communicating with each other. The program allows:

a computer that configures the receiver-side communication node to execute
a function of creating a first authentication message in response to a connection request message transmitted from the transmitter-side communication node, and
a function of verifying a second authentication message that is transmitted from the transmitter-side communication node; and
a computer that configures the transmitter-side communication node to execute
a function of verifying the first authentication message that is transmitted from the receiver-side communication node, and
a function of creating the second authentication message based on a verification result of the first authentication message.

With the present invention, the second authentication message creating device creates the second authentication message by utilizing the first communication identifier contained in the first authentication message created by the second communication node that is requested to be connected, while the second verification message checking device verifies whether or not the received second authentication message is the message corresponding to the first authentication message so as to perform authentication of the first communication node. Therefore, it is possible to prevent the communication node from responding to a connection request from an illegitimate communication node and being connected to that illegitimate communication node, for example, so that a risk of having the information leaked to the illegitimate communication node can be avoided.

Particularly, it is possible to provide an effect of extending the life of batteries for radio communication nodes that are operated for a long time with limited power supply resources such as batteries. The reason for this is that the amount of the power required for the authentication processing can be reduced through reducing the data amount communicated between the communication nodes for the authentications and reducing the amount of data arithmetic operations.

Particularly, it is possible to reduce the amount of information kept permanently in each radio communication node for authentications for being able to be applied to radio communication nodes that configure a radio sensor network that is provided with a large number of sensors to collect sensing information. The reason for this is that it is unnecessary to keep individual information for each communication node as the authentication partner, so that the amount of information to be kept permanently does not increase even if authentications are to be performed with a large number of communication nodes.

BEST MODE FOR CARRYING OUT THE INVENTION

(FIRST EXEMPLARY EXEMPLARY EMBODIMENT)

Exemplary exemplary embodiments of the invention will be described hereinafter by referring to the accompanying drawings.

A first exemplary exemplary embodiment of the present invention is a communication node authentication system which takes one of communication nodes that communication with each other as a transmitter-side communication node and the other as a receiver-side communication node, and starts the communication after authenticating the nodes.

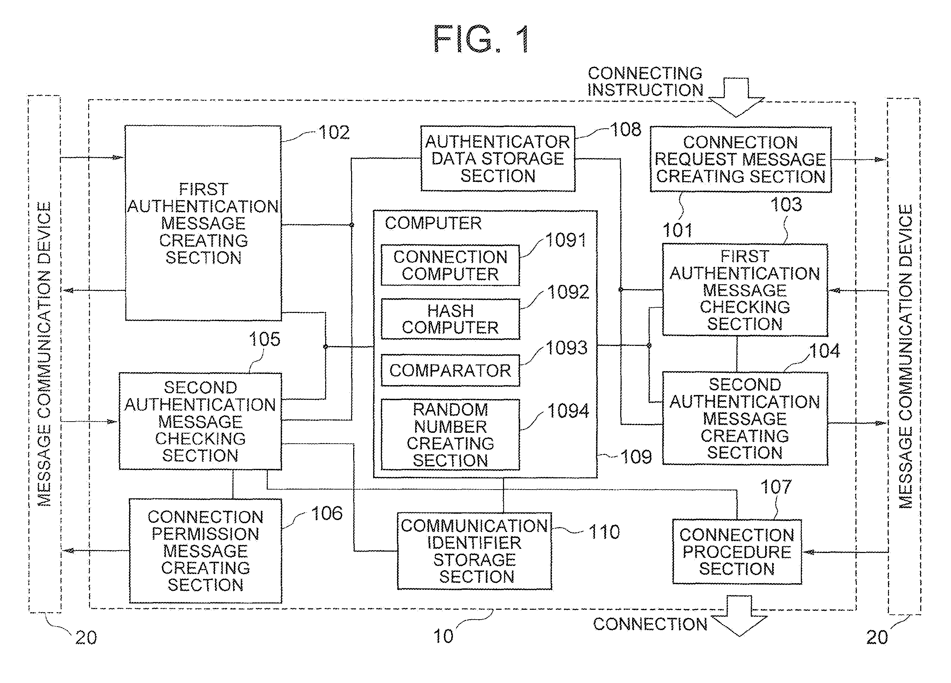

As shown in FIG. 1, each of the communication nodes used in the communication node authentication system according to the first exemplary exemplary embodiment of the present invention has a communication node authentication device 10 and a communication device 20.

As shown in FIG. 1, the message communication device 20 has an interface with the communication node authentication device 10, and exchanges communications with another communication node to transmit/receive various messages. Even though the message communication devices 20 are illustrated separately on the left and right sides of the communication node authentication device 10 in FIG. 1, those message communication devices 20 represent a single message communication device. The message communication device 20 on the right side is illustrated as the device functioning to transmit information including a connection request to another communication node, while the message communication device 20 on the left side is illustrated as the device functioning to receive information including the connection request transmitted from the other communication node.

The communication node authentication device 10 is a device that is a feature of the first exemplary exemplary embodiment of the present invention. The communication node authentication device 10 according to the first exemplary exemplary embodiment of the present invention shown in PIG. 1 includes a connection request message creating section 101, a first authentication message creating section 102, a first authentication message checking section 103, a second authentication message creating section 104, a second authentication message checking section 105, a connection permission message creating section 106, a connection procedure section 107, an authenticator data storage section 108, a computer 109, and a communication identifier storage section 110. The communication node authentication device 10 shown in FIG. 1 is a structure having both the function of a transmitter-side communication node and the function of a receiver-side communication node.

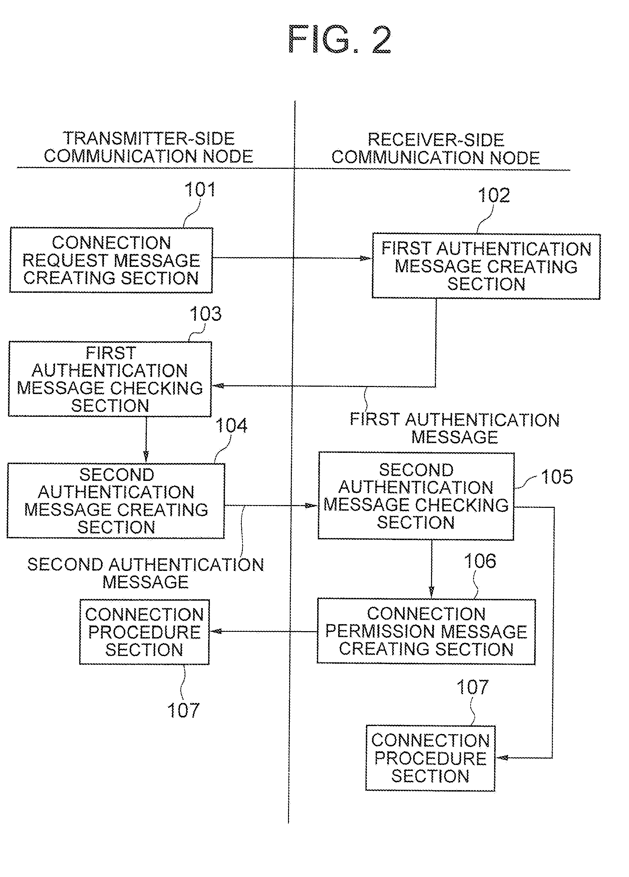

The communication mode authentication device 10 is mounted to each of the communication nodes which communicate with each other. While FIG. 1 illustrates a single communication node to which the communication node authentication device 10 is mounted, the communication node authentication device 10 shown in FIG. 1 is also mounted to other communication nodes which communicate with the communication node shown in FIG. 1. FIG. 2 illustrates the communication node authentication device 10 separately based on the functions as the transmitter-side authentication device (transmitter-side communication node) and the receiver-side communication node (receiver-side communication node).

As shown in FIG. 2, the connection request creating section 101 starts up when the communication node shown in FIG. 1 functions as the transmitter-side communication node. The connection request message creating section 191 creates a connection request message for requesting connection to another communication node, and transmits the created connection request message to the message communication device 20.

As shown in FIG. 2, the first authentication message creating section 102 starts up when the communication node shown in FIG. 1 functions as the receiver-side communication node. The first authentication message creating section 102 creates a first authentication message upon receiving a connection request message from the transmitter-side communication node, which is transmitted from another communication node (transmitter-side communication node) that is not shown and received by the message communication device 20. The first authentication message means information created by the first authentication message creating section 102 of the receiver-side communication node for allowing the transmitter-side communication node to confirm whether or not the receiver-side communication node that has received the connection request from the transmitter-side communication node is the legitimate connection partner for the transmitter-side communication node.

As shown in FIG. 2, the first authentication message checking section 103 starts up when the communication node shown in FIG. 1 functions as the transmitter-side communication node. The first authentication message checking section 103 verifies the first authentication message, upon receiving the first authentication message which is transmitted from another communication node (receiver-side communication node) that is not shown and received by the message communication device 20. The first authentication message received by the first authentication message checking section 103 is the first authentication message that is created by the first authentication message creating section 102 of the receiver-side communication node that is not shown.

As shown in FIG. 1, the second authentication message creating section 104 starts up when the communication node shown in FIG. 1 functions as the transmitter-side communication node. The second authentication message creating section 104 creates a second authentication message, when the first authentication message checking section 103 of the transmitter-side communication node succeeds in verification of the first authentication message that is transmitted from the receiver-side communication node (not shown) and received by the message communication device 20. "The first authentication message checking section 103 has successfully verified the message" means that the first authentication checking section 103 has verified that the receiver-side communication node as the transmitter of the first authentication message is the receiver-side communication node as the legitimate connection partner. The second authentication message created by the second authentication message creating section 104 is the information for allowing the receiver-side communication node to confirm whether or not the transmitter-side communication node that has transmitted second authentication message is the legitimate connection partner. At the same time, it is the information for enabling the transmitter-side communication node itself to confirm whether or not the communication node itself is the transmission partner of the first authentication message that is created by the receiver-side communication node in a series of authentication sequence.

As shown in FIG. 2, the second authentication message checking section 105 starts up when the communication node shown in FIG. 1 functions as the receiver-side communication node. The second authentication message checking section 105 verifies the second authentication message upon receiving the second authentication message transmitted from the transmitter-side communication node that is not shown. When it is verified that the transmitter-side communication node from which the second authentication message is transmitted is the transmitter-side communication node as the legitimate connection partner, the second authentication message checking section 105 transmits that to the connection permission message creating section 106 and the connection procedure section 107, respectively.

Creation of the first authentication message by the first authentication message creating section 102, creation of the second authentication message by the second authentication message creating section 104, verification of the first authentication message by the first authentication message checking section 103, and verification of the second authentication message by the second authentication message checking section 105 will be described later.

As shown in FIG. 2, the connection permission message creating section 106 starts up when the communication node shown in FIG. 1 functions as the receiver-side communication node. The connection permission message creating section 106 creates a connection permission message for informing the transmitter-side communication node that it is permitted to connect, upon receiving the notification that the second authentication message checking section 105 has successfully verified the second authentication message.

As shown in FIG. 2, when the communication node shown in FIG. 1 functions as the transmitter-side communication node, the connection procedure section 107 starts a procedure for connecting to the receiver-side communication node (not shown) as the communication partner, upon receiving the connection permission message that is transmitted from the connection permission message creating section 106 of the receiver-side communication node that is not shown. Further, as shown in FIG. 2, the connection procedure section 107 starts a procedure for connecting to the transmitter-side communication node (not shown), when the communication node shown in FIG. 1 functions as the receiver-side communication node, or when the second authentication message checking section 105 successfully verifies the second authentication message.

The authenticator data storage section 108 stores authenticator data that is the information for authenticating (guaranteeing) the legitimacy of a specific communication node. Note here that the authenticator data storage section 108 of the transmitter-side communication node and that of the receiver-side communication node store the same authenticator data. The authenticator data is set and registered by a communication system supervisor, and it is stored in the authenticator data storage sections 108 of all the communication nodes that communicate with each other so as to be shared thereby. The authenticator data stored in the authenticator data storage sections 108 is used in the receiver-side communication node for creating the first authentication message and verifying the second authentication message, and used in the transmitter-side communication node for verifying the first authentication message and creating the second authentication message.

The computer 109 executes data calculation, comparison, and creation of communication identifiers for performing creation/verification of the first authentication message as well as creation/verification of the second authentication message. Note here that the communication identifier is the information for distinguishing a first authentication message or a second authentication message from another first authentication message or second authentication message. It is created as a value every time the first authentication message or the second authentication message is created, and related to a series of authentication sequence (specifically, the first authentication message and the second authentication message). Therefore, it is desirable to be a value that has no reproducibility at least in a period where the communication system is expected to operate properly. If the characteristic, "having no reproducibility", cannot be realized due to a limit in the number of bits or the like, the same number may need to be used repeatedly. However, it is necessary to take some measures so that the data is not deciphered by an intruder that brakes into communications maliciously. As the simplest way, there is a method of using an adder/subtractor counter by utilizing sufficiently large bit number. In that case, the same value is still used after a certain period has passed. However, attacks by spoofing nodes or the like can be made more difficult to be attempted, through setting the period to be a large value (for example, one month or one year). Further, in a case where a sufficiently large number of bits cannot be used, or the number of communications is large and the period becomes short, random numbers may be used so that the timing for attacks can become harder to be identified. The receiver-side communication node generates the first communication identifier for being related (corresponded) to the first authentication message, and the transmitter-side communication node generates the second communication identifier for being related (corresponded) to the second authentication message.

The computer 109 includes a connection computer 1091, a hash computer 1092, a comparator 1093, and a random number creating device 1094.

The connection computer 1091 of the computer 109 performs a connecting operation of the communication identifier and the (authenticator data. The hash computer 1092 performs a hash operation on the connection result obtained by the connecting operation performed by the connection computer 1091. The comparator 1093 compares a first verification value taken out from the received first authentication message with a first verification value obtained by a calculation. The random number creating device 1094 of the receiver-side communication node creates the first communication identifier. The random number creating device 1094 of the transmitter-side communication node creates the second communication identifier.

The communication identifier storage section 110 stores the communication identifier of the own node that is created by the random number creating device 1094 of the computer 109. In this exemplary exemplary embodiment of the invention, the communication identifier storage section 110 of at least the receiver-side communication node stores the first communication identifier created by the own node.

In the structure shown in FIG. 1, the first authentication message creating section 101, the first authentication message checking section 102, the second authentication message creating section 103, the second authentication message checking section 104, the connection request message creating section 105, the connection permission message creating section 106, and the connection procedure section 107 are built as hardware. However, the exemplary exemplary embodiment is not limited only to such case. Those structures may be built as a program mounted to the communication node authentication device 10, which allows a computer to execute the functions of the first authentication message creating section 101, the first authentication message checking section 102, the second authentication message creating section 103, the second authentication message checking section 104, the connection request message creating section 105, the connection permission message creating section 106, and the connection procedure section 107.

Further, the authenticator data storage section 108 and the communication identifier storage section 110 may be achieved by the storage device provided to the communication node authentication device 10, for example. Further, the computer 109 may be achieved by various kinds of arithmetic operation circuits provided to the communication node authentication device 10 and a microprocessor or the like which operates according to a program.

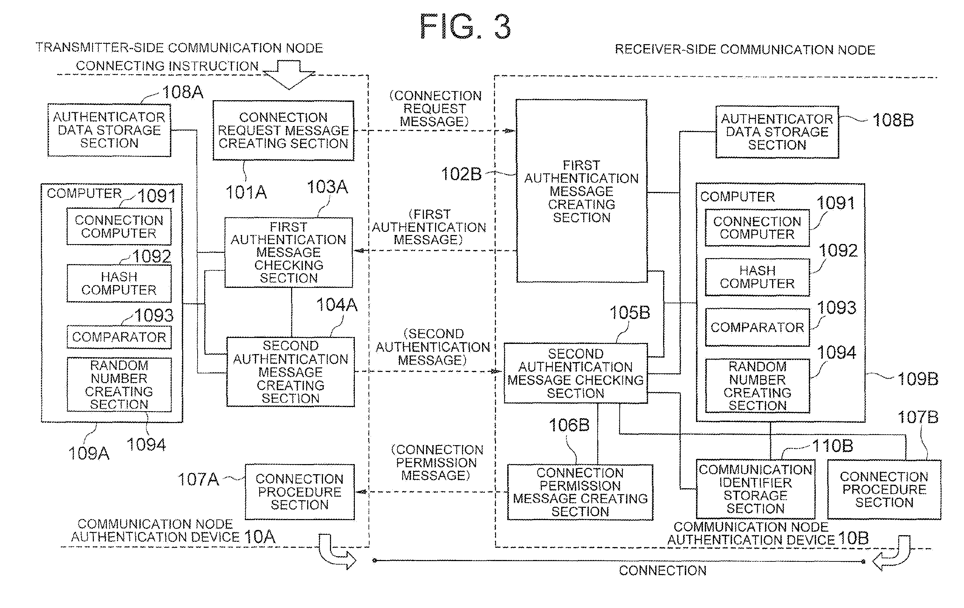

Further, when functioning as the transmitter-side communication node, it is necessary for the communication node authentication device 10 to have the connection request message creating section 101, the first authentication message checking section 103, the second authentication message creating section 104, and the connection procedure section 107. When functioning as the receiver-side communication node, it is necessary for the communication authentication device 10 to have the first authentication message creating section 102, the second authentication message checking section 105, the connection permission message creating section 106, and the connection procedure section 107. While the communication node authentication device 10 shown in FIG. 1 is built as the configuration which executes both functions of the transmitter-side communication node and the receiver-side communication node, it is not limited only to such case. The communication node authentication device 10 may also be built as the configuration shown in FIG. 3.

That is, a communication node authentication device 10A mounted to a transmitter-side communication node shown in FIG. 3 includes a connection request message creating section 101, a first authentication message checking section 103, a second authentication message creating section 104, and a connection procedure section 107. A communication node authentication device 10B mounted to a receiver-side communication node shown in FIG. 3 includes a first authentication message creating section 102, a second authentication message checking section 105, a connection permission message creating section 106, and a connection procedure section 107.

In FIG. 3, different reference numerals are applied to each constituent for distinguishing the communication node authentication device 10A of the transmitter-side communication node and the communication authentication device 10B of the receiver-side communication node. That is, the communication node authentication device 10 mounted to the transmitter-side communication node includes a connection request message creating section 101A, a first authentication message checking section 103A, a second authentication message creating section 104A, and a connection procedure section 107A. The connection request message creating section 101A, the first authentication message checking section 103A, the second authentication message creating section 104A, and the connection procedure section 107A of FIG. 3 correspond to the connection request message creating section 101, the first authentication message checking section 103, the second authentication message creating section 104, and the connection procedure section 107 of FIG. 1, respectively.

The communication node authentication device 10B mounted to the receiver-side communication node includes a first authentication message creating section 102B, a second authentication message checking section 105B, a connection permission message creating section 106B, and a connection procedure section 107B. The first authentication message creating section 102B, the second authentication message checking section 105B, the connection permission message creating section 106B, and the connection procedure section 107B of FIG. 3 correspond to the first authentication message creating section 102, the second authentication message checking section 105, the connection permission message creating section 106, and the connection procedure section 107 of FIG. 1, respectively.

Further, the communication node authentication device 10A mounted to the transmitter-side communication node shown in FIG. 3 includes a computer 109A and an authenticator storage section 108A. The computer 109A and the authenticator storage section 108A of FIG. 3 correspond to the computer 109 and the authenticator storage section 108 of FIG. 1, respectively. The communication node authentication device 10B mounted to the receiver-side communication node shown in FIG. 3 includes an authenticator storage section 108B and a communication identifier storage section 110B. The authenticator storage section 108B and the communication identifier storage section 110B of FIG. 3 correspond to the authenticator storage section 108 and a communication identifier storage section 110 of FIG. 1, respectively.

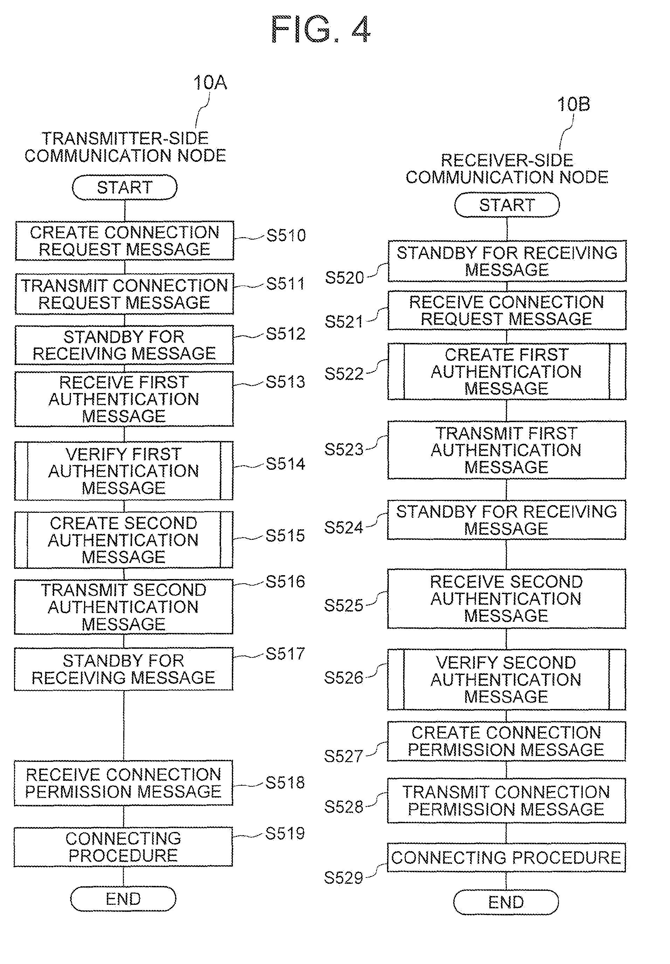

Next, operations when executing a communication authentication method using the communication node authentication system according to the first exemplary exemplary embodiment of the present invention will be described by referring to FIG. 4. Explanations provided below describe the operations of a case where the communication node authentication method is executed by using the communication node authentication system in which the transmitter-side communication node and the receiver-side communication node in the configurations of FIG. 3 are combined. However, the operations are the same for a case where the communication authentication method is executed by using the communication node authentication system in which the transmitter-side communication node and the receiver-side communication node in the configurations of FIG. 1 and FIG. 2 are combined.

A command for instructing connection is inputted from outside to the communication node authentication device 10A of the transmitter-side communication node. Upon receiving the external command, the connection request message creating section 101A creates a connection request message (step S510 of FIG. 4). When creating the connection request message, the connection request message creating section 101A creates the connection request message that includes at least information which makes it clear that the message is a connection request directed to the receiver-side communication node (B) from the transmitter-side communication node (A).

The message communication device 20 of the transmitter-side communication node transmits the connection request transmitted from the connection request message creating section 101A towards the receiver-side communication node (step S511 of FIG. 4).

The receiver-side communication node stands by for receiving the connection request message form the transmitter-side communication node (step S520 of FIG. 4).

When the connection request message is transmitted from the transmitter-side communication node, the receiver-side communication node receives the transmitted connection request message by the message communication device 20, and gives the received connection request message to the communication node authentication device 10B (step S521 of FIG. 4).

Upon receiving the connection request message, the first authentication message creating section 102B of the communication node authentication device 10B creates a first authentication message (step S522 of FIG. 4), and transmits the first authentication message to the message communication device 20. The message communication device 20 transmits the first authentication message received from the first authentication message creating section 102B towards the transmitter-side communication node (step S523 of FIG. 4).

The first authentication message created by the first authentication message creating section 102B is a message which at least includes: information that is required for checking whether or not the receiver-side communication node that has received the connection request from the transmitter-side communication node is a legitimate connection partner; the first communication identifier; and a first verification value for verifying the first authentication message. The first communication identifier is a value that changes every time the authentication message creating section 102B creates a first authentication message, for example, and it is a value created by a random number creating device, a pseudorandom number creating device, an adder counter, a subtractor counter, or the like. Further, the first verification value is a value that is obtained by performing a first arithmetic operation based on the authenticator data and the first communication identifier. The first arithmetic operation needs to be an operation (for example, an operation using unidirectional function) which has such a characteristic that the first verification value can be easily created from the authenticator data and the first communication identifier, and that the authenticator data cannot be easily derived and speculated from the created first verification value and the information (the first communication identifier) except the authenticator data. Concrete examples of the first authentication message creating and verifying actions will be described later.

After transmitting the connection request, the transmitter-side communication node stands by to receive the first authentication message that is transmitted from the receiver-side communication node (step S512 of FIG. 4).

Upon receiving the first authentication message from the receiver-side communication node at the message communication device 10, the transmitter-side communication node gives the received first authentication message to the communication node authentication device 10A (step S513 of FIG. 4).

Upon receiving the first authentication message from the message communication device 10, the first authentication message checking section 103A of the communication node authentication device 10A performs a predetermined first arithmetic operation with the value (first communication identifier) contained in the received first authentication message and the authenticator data stored in the authenticator data storage section 108A, and compares the value obtained thereby and the value (first verification value) contained in the received first authentication message so as to verify the first authentication message (step S514 of FIG. 4). When the result of the first arithmetic operation performed by the first authentication message checking section 103A matches the first verification value contained in the received first authentication message, the first authentication message checking section 103A judges that verification is succeeded. When the values are different, the first authentication message checking section 103A judges that verification is failed. Note here that the first arithmetic operation is shared by all the communication nodes to which the exemplary exemplary embodiment of the invention is applied, by being set and registered by the communication system supervisor, etc.

As described above, when the first authentication message is received from the receiver-side communication node B (step S513 of FIG. 4), the first authentication message checking section 103A of the communication node authentication device 10A verifies the first authentication message (step S514). However, when the transmitter-side communication node A does not receive the first authentication message from the receiver-side communication node B within a prescribed time, for example, the connection request message creating section 101A of the transmitter-side communication node A may transmit a connection request message anew, or the first authentication message checking section 103A of the transmitter-side communication node A may end the connection processing by judging that it is failed to be connected.

When the first authentication message checking section 103A of the transmitter-side communication node succeeds to verify the first authentication message that is transmitted from the receiver-side communication node, the second authentication message creating section 104A creates a second authentication message based on a notification of successful verification transmitted from the first authentication message checking section 103A (step S515 of FIG. 4). The second authentication message creating section 104A transmits the created second authentication message to the message communication device 10.

The second authentication message is a message which at least includes: information which indicates that the transmitter-side communication node that transmitted the second authentication message is the communication node that initially transmitted the connection request; the second communication identifier; and the second verification value for verifying the second authentication message. The second communication identifier is a value that changes every time the second authentication message creating section 104A creates a second authentication message, for example, and it is a value created by a random number creating device, a pseudorandom number creating device, an adder counter, a subtractor counter, or the like. Further, the second verification value is a value that is obtained by performing a second arithmetic operation based on the authenticator data, the second communication identifier, and the first communication identifier. As in the case of the first arithmetic operation, the second arithmetic operation needs to be an operation which has such a characteristic that the second verification value can be easily created from the authenticator data, the first communication identifier, and the second communication identifier, and that the authenticator data cannot be easily derived and speculated from the created second verification value and the information (the first communication identifier and the second communication identifier) except the authenticator data. The first communication identifier used for the second arithmetic operation is the first communication identifier that is contained in the first authentication message that is successfully verified in step S514.

The second authentication message creating section 104A creates the second communication identifier by using the computer 109A, for example, and creates the second verification value by performing the predetermined second arithmetic operation based on the created second communication identifier, the first communication identifier contained in the received first authentication message, and the authenticator data stored in the authenticator data storage section 108A. The second authentication message creating section 104A creates a second authentication message which contains the information indicating that the transmitter-side communication node that transmitted the second authentication message is the communication node that initially transmitted the connection request, the created second communication identifier, and the created second verification value. Concrete examples of the second authentication message creating and verifying operations will also be described later.

Upon receiving the second authentication message from the second authentication message creating section 104A, the message communication device 20 of the transmitter-side communication node transmits the second authentication message to the receiver-side communication node B (step S516 of FIG. 4).

After transmitting the first authentication message, the communication node authentication device 10B of the transmitter-side communication node stands by to receive the second authentication message that is transmitted from the transmitter-side communication node (step S524 of FIG. 4).

Upon receiving the second authentication message from the transmitter-side communication node (step S525 of FIG. 4), the message communication device 20 of the receiver-side communication node gives the received second authentication message to the communication node authentication device 10B.

Upon receiving the second authentication message that is received by the message communication device 20, the second authentication message checking section 105B of the communication node authentication device 10B performs verification of the second authentication message (step S526 of FIG. 4).

Specifically, the second authentication message checking section 104B performs the predetermined first arithmetic operation with the value (second communication identifier) contained in the received second authentication message, the authenticator data stored in the authenticator data storage section 108B, and the first communication identifier stored in the communication identifier storage section 110B, and compares the value obtained thereby and the value (second verification value) contained in the received second authentication message so as to verify the second authentication message. When the result of the second arithmetic operation performed by the second authentication message checking section 104B matches the second verification value contained in the received second authentication message, the second authentication message checking section 105B judges that verification is succeeded. When the values are different, the second authentication message checking section 105B judges that verification is failed. Note here that the second arithmetic operation is also shared by all the communication nodes to which the exemplary exemplary embodiment of the invention is applied, by being set and registered by the communication system supervisor, etc.

When the second authentication message is successfully verified, the connection permission message creating section 106B creates a connection permission message upon receiving the result indicating the successful verification from the second authentication message checking section 104B (step S527 of FIG. 4), and transmits the connection permission message to the message communication device 20 and the connection procedure section 107B.

Upon receiving the connection permission message from the connection permission message creating section 106B, the message communication device 20 transmits the connection message to the transmitter-side communication node (step S528 of FIG. 4).

Upon receiving the connection permission message from the second authentication message checking section 104B, the connection procedure section 107B starts a connection procedure with the transmitter-side communication node (step S529 of FIG. 4).

When it is failed to verify the second authentication message, the connection permission message creating section 106B may judge it as a connection request from an illegitimate communication node, and create a connection denied message indicating that the connection is not permitted. The message communication device 20 then may transmit the connection denied message that is created by the connection permission message creating section 106B towards the transmitter-side communication node.

After transmitting the second authentication message, the transmitter-side communication node stands by to receive a connection permission message from the receiver-side communication node (step S517 of FIG. 4).

When the connection permission message is transmitted from the receiver-side communication node, the message communication device 20 of the transmitter-side communication node 20 receives the connection permission message, and gives the received connection permission message to the communication node authentication device 10B (step S518 of FIG. 4).

Upon receiving the connection permission message received at the message communication device 20, the connection procedure section 107A of the transmitter-side communication node starts to connect with the receiver-side communication node (step S519 of FIG. 4).

Through the process of above-described processing, mutual communication between the connection procedure section 107A of the transmitter-side communication node and the connection procedure section 107B of the receiver-side communication node is started.

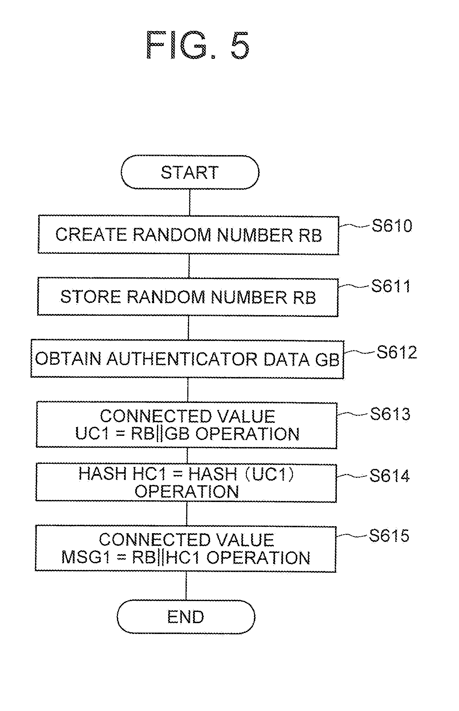

Next, creation and verification of the first authentication message and the second authentication message will be described by using concretive examples by referring to FIG. 3 and FIG. 5. The first authentication message creating section 102B and the second authentication message creating section 104A create the first authentication message and the second authentication message by using the computers 109A and 109B, respectively. The first message checking section 103A and the second message checking section 105B perform verification of the first authentication message and the second authentication message by using the computers 109A and 109B, respectively. A result of a connecting operation of data A and data B performed by the connection computers 1091 of the computers 109A and 109B (109) shown in FIG. 3 (FIG. 1) is written as "A| |B". Further, a result of a hash operation of the data A performed by the hash computers 1092 of the computers 109A and 109B (109) shown in FIG. 3 (FIG. 1) is written as "HASH (A)".

First, described is a case where the first authentication message creating section 102B of the receiver-side communication node creates the first authentication message.

The first authentication message creating section 102B of the receiver-side communication node creates the first authentication message by using the computer 109B of the receiver-side communication node. That is, the computer 109B of the receiver-side communication node creates random numbers (written as RB hereinafter) by using the random number creating device 1094 (step S610 of FIG. 5).

Then, the computer 109B of the receiver-side communication node stores the random numbers (RB) created by the random number creating device 1094 to the communication identifier storage section 110B of the receiver-side communication node as the first communication identifier (step S611 of FIG. 5).

Then, the computer 109B of the receiver-side communication node obtains the authenticator data (authenticator data set and registered to the communication node authentication device 10B; written as GB hereinafter) which is stored in the authenticator data storage section 108B of the receiver-side communication node (step S612). The computer 109B of the receiver-side communication node creates the first verification value based on the first communication identifier RB created by the random number creating device 1094 and the authenticator data GB stored in the authenticator data storage section 108B.

Specifically, the computer 109B of the receiver-side communication node performs a connecting operation of the first communication identifier RB and the authenticator data GB by using the connection computer 1091 (step S613 of FIG. 5). Provided that the result of the connecting operation performed by the connection computer 1091 is UC1, the connecting operation result UC1 can be expressed with Expression (1), for example.

$$UC1 = RB||GB \quad --- \text{ Expression (1)}$$

The connecting operation result UC1 may be any data that can be calculated by using the first communication identifier RB and the authenticator data GB. For example, the connecting operation result UC1 may be obtained by following arithmetic operations as in Expressions (2).

$$UC1 = GB||RB$$

$$UC1 = RB||GB||RB$$

$$UC1 = RB||HASH(GB) \quad --- \text{ Expressions (2)}$$

Then, the computer 109B of the receiver-side communication node performs a hash operation on the connecting operation result UC1 processed by the connection computer 1091 by using the hash computer 1092 (step S614 of FIG. 5). For the hash operation, well-known functions such as MD2, MD5, SHA, and the like may be used. Provided that the result of the hash operation is HC1, it is expressed with Expression (3). This hash operation result HC1 corresponds to the first verification value.

$$HC1 = HASH(UC1) \quad --- \text{ Expression (3)}$$

Then, the computer 109B of the receiver-side communication node creates the first authentication message through performing a connecting operation of the first communication identifier RB and the hash operation result HC1 by using the connection computer 1091 (step S615 of FIG. 5). Provided that the first authentication message is MSG1, it is expressed as in Expression (4). The first authentication message MSG1 contains the first communication identifier RB and the first verification value HC1, and the first communication identifier RB and the first verification value HC1 may be separated easily.

$$MSG1 = RB||HC1 \quad --- \text{ Expression (4)}$$

The first arithmetic operation as an operation for obtaining the first verification value in the step of creating the first authentication message in this example is one of arithmetic operations shown in Expressions (5).

$$HASH(RB||GB)$$

$$\text{HASH}(\text{GB}||\text{RB})$$

$$\text{HASH}(\text{RB}||\text{GB}||\text{RB})$$

$$\text{HASH}(\text{RB}||\text{HASH}(\text{GB})) \qquad \text{--- Expressions (5)}$$

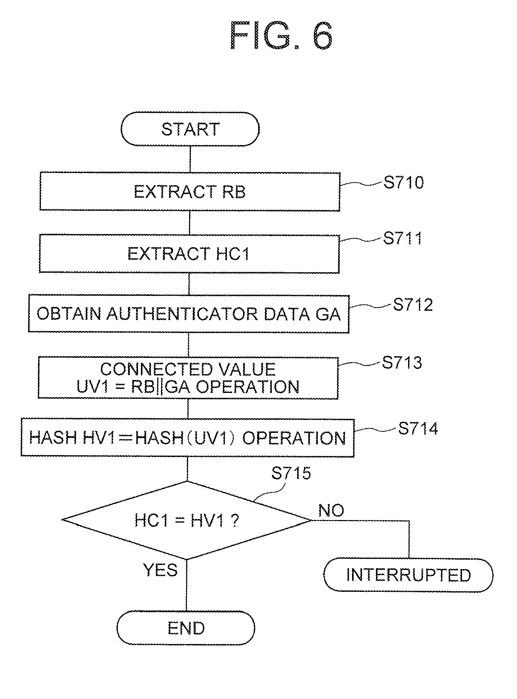

Next, described by referring to FIG. 3 and FIG. 6 is a case where the first authentication message checking section 103A of the transmitter-side communication node performs verification on the first authentication message transmitted from the receiver-side communication node by using the computer 109A of the transmitter-side communication node.

The computer 109A of the transmitter-side communication node extracts the first communication identifier RB and the first verification value HC1 from the first communication message MSG1 that is received at the message communication device 10 (steps S710 and 711 of FIG. 6).

Then, the computer 109A of the transmitter-side communication node obtains the authenticator data (authenticator data set and registered to the communication node authentication device 10A; written as GA hereinafter) which is stored in the authenticator data storage section 108A of the transmitter-side communication node (step S712). The computer 109A of the transmitter-side communication node obtains the first verification value of the transmitter-side communication node based on the first communication identifier RB extracted from the received first authentication message MSG1 and the authenticator data GA stored in the authenticator data storage section 108A.

Specifically, the computer 109A of the transmitter-side communication node performs a connecting operation of the first communication identifier RB extracted from the received first authentication message MSG1 and the authenticator data GA by using the connection computer 1091 (step S713). Provided that a result of the connecting operation performed by the connection computer 1091 is UV1, the connecting operation result UV1 can be expressed with Expression (6), for example.

$$\text{UV1} = \text{RB}||\text{GA} \qquad \text{--- Expression (6)}$$

The connecting operation result UV1 may be any data that can be calculated by using the first communication identifier RB and the authenticator data GA. For example, the connecting operation result UV1 may be obtained by following calculations as in Expressions (7). It is to be noted, however, that the arithmetic operation is the same operation as that performed to obtain the connecting operation result UC1 in step S613 of FIG. 5.

$$\text{UV1} = \text{GA}||\text{RB}$$

$$\text{UV1} = \text{RB}||\text{GA}||\text{RB}$$

$$\text{UV1} = \text{RB}||\text{HASH}(\text{GA}) \qquad \text{--- Expressions (7)}$$

Then, the computer 109A of the transmitter-side communication node performs a hash operation on the connecting operation result UV1 processed by the connection computer 1091 by using the hash computer 1092 (step S714 of FIG. 6). The hash operation performed herein is also the same operation that is performed in step S614 of FIG. 5 for obtaining the hash operation result HC1. Provided that the result of the hash operation is HV1, it is expressed with Expression (8). This hash operation result HV1 corresponds to the first verification value of the communication node authentication device 10A.

$$\text{HV1} = \text{HASH}(\text{UV1}) \qquad \text{--- Expression (8)}$$

At last, the computer 109A of the transmitter-side communication node compares the first verification value HC1 that is extracted from the received first authentication message with the first verification value HV1 that is obtained by the arithmetic operation by using the comparator 1093 (step S715).

When it is found as a result of the comparison made by the comparator 1093 that the first verification value HC1 and the first verification value HV1 are the same, the first authentication message checking section 103A of the transmitter-side communication node judges that verification of the first authentication message is succeeded. When it is found as a result of the comparison made by the comparator 1093 that the first verification value HC1 and the first verification value HV1 are not the same, the first authentication message checking section 103A of the transmitter-side communication node judges that verification of the first authentication message is failed.

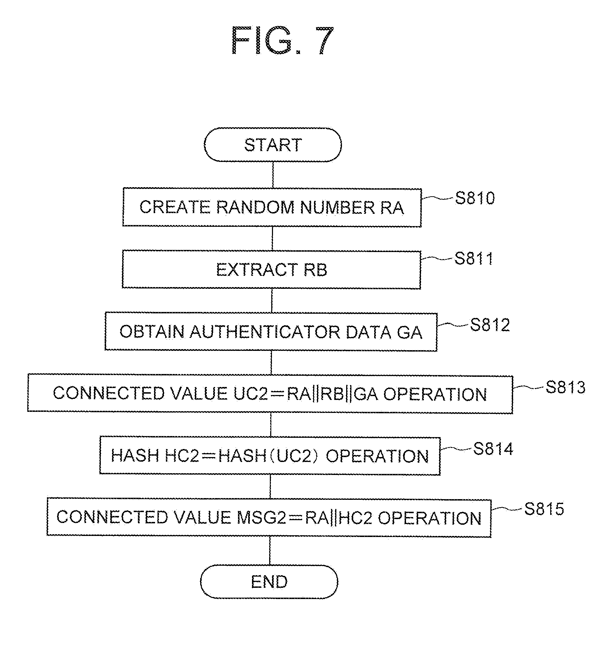

Next, described by referring to FIG. 3 and FIG. 7 is a case where the second authentication message creating section 104A of the transmitter-side communication node creates a second authentication message.

The second authentication message creating section 104A of the transmitter-side communication node creates the second authentication message by using the computer 109A of the transmitter-side communication node. That is, the computer 109A of the transmitter-side communication node creates random numbers (written as RB hereinafter) as the second communication identifier by using the random number creating device 1094 (step S810).

Then, the computer 109A of the transmitter-side communication node extracts the first communication identifier RB from the first authentication message that is received at the message communication device 20 of the transmitter-side communication node (step S811 of FIG. 7). The first communication identifier RB that is extracted at the time of the verification processing performed by the first authentication message checking section 102A may also be used as the extracted first communication identifier RB.

Then, the computer 109A of the transmitter-side communication node obtains the authenticator data GA which is stored in the authenticator data storage section 108A of the transmitter-side communication node (step S812 of FIG. 7) . The computer 109A of the transmitter-side communication node creates the second verification value based on the first communication identifier RB contained in the first authentication message, the second communication identifier RA created by the random number creating device 1094, and the authenticator data GA stored in the authenticator data storage section 108A.

Specifically, the computer 109A of the transmitter-side communication node performs a connecting operation of the first communication identifier RB, the second communication identifier RA, and the authenticator data GA by using the connection computer 1091 (step S813 of FIG. 7). Provided that the result of the connecting operation performed by the connection computer 1091 is UC2, the connecting operation result UC2 can be expressed with Expression (9), for example.

$$UC2 = RA||RB||GA \qquad --- \text{ Expression (9)}$$

The connecting operation result UC2 may be any data that can be calculated by using the first communication identifier RB, the second communication identifier RA, and authenticator data GB. For example, the connecting operation result UC2 may be obtained by following arithmetic operations as in Expressions (10).

$$UC2 = GA||RA||RB$$

$$UC2 = RA||RB||GA||RB$$

$$UC2 = RA||RB||HASH(GA) \quad --- \text{ Expressions (10)}$$

Then, the computer 109A of the transmitter-side communication node performs a hash operation on the connecting operation result UC2 obtained by the connection computer 1091 by using the hash computer 1092 of the transmitter-side communication node (step S814 of FIG. 7). For the hash operation, well-known functions such as MD2, MD5, SHA, and the like may be used. Provided that the result of the hash operation is HC2, the hash operation result HC2 is expressed with Expression (11). This hash operation result HC2 corresponds to the second verification value.

$$HC2 = HASH(UC2) \qquad \text{--- Expression (11)}$$

Then, the computer 109A of the transmitter-side communication node creates the second authentication message through performing a connecting operation of the second communication identifier RA and the hash operation result HC2 by using the connection computer 1091 of the transmitter-side communication node. Provided that the second authentication message is MSG2, it is expressed as in Expression (12). The first authentication message MSG2 contains the second communication identifier RA and the second verification value HC2, and the second communication identifier RA and the second verification value HC2 may be separated easily.
$$MSG2 = RA||HC2 \qquad \text{--- Expression (12)}$$

The second arithmetic operation as an operation for obtaining the second verification value in the step of creating the second authentication message in this example is one of arithmetic operations shown in Expressions (13).
$$HASH(RA||RB||GA)$$

$$HASH(GA||RA||RB)$$

$$HASH(RA||RB||GA||RB)$$

$$HASH(RA||RB||HASH(GA)) \qquad \text{--- Expressions (13)}$$

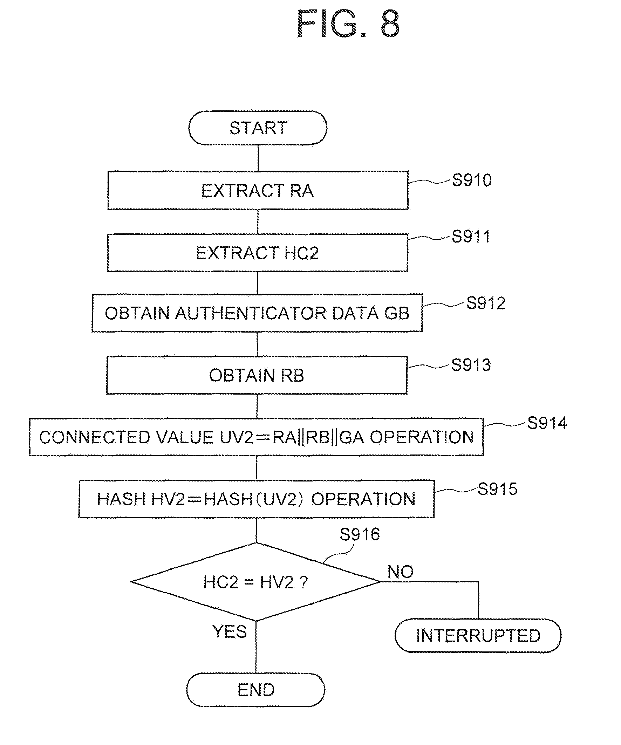

Next, described is a case where the second authentication message checking section 105B of the receiver-side communication node verifies the second authentication message by referring to FIG. 3 and FIG. 8.
The second authentication message checking section 102B of the receiver-side communication node verifies the second authentication message received at the message communication device 20 of the receiver-side communication node by using the computer 109B of the receiver-side communication node.
That is, the computer 109B of the receiver-side communication node extracts the second communication identifier RA and the second verification value HC2 from the second authentication message MSG2 that is received at the message communication device 20 of the receiver-side communication node (steps S910 and 911 of FIG. 8).
Then, the computer 109B of the receiver-side communication node obtains the authenticator data GB that is stored in the authenticator data storage section 108B of the receiver-side communication node (step S912 of FIG. 8).
Then, the computer 109B of the receiver-side communication node obtains the first communication identifier RB created at the time of creating the first authentication message, which is stored in the communication identifier storage section 110B of the receiver-side communication node (step S913 of FIG. 8).
Then, the computer 109B of the receiver-side communication node obtains the second verification value of the communication node authentication device 10B based on the second communication identifier RA extracted from the second authentication message, the stored first communication identifier RB, and the stored authenticator data GB.
Specifically, the computer 109B of the receiver-side communication node performs a connecting operation of the second communication identifier RA, the first communication identifier RB, and the authenticator data GB by using the connection computer 1091 of the receiver-side communication node (step S914 of PIG. 8). Provided that a result of the connecting operation performed by the connection computer 1091 is UV2, the connecting operation result UV2 can be expressed with Expression (14), for example.
$$UV2 = RA||RB||GB \qquad \text{--- Expression (14)}$$

The connecting operation result UV2 may also be any data that can be calculated by using the first communication identifier RB and the authenticator data GB. For example, the connecting operation result UV2 may be obtained by following arithmetic operations as in Expressions (15). It is to be noted, however, that the operation is the same arithmetic operation as that performed to obtain the connecting operation result UC2 in step S813 of FIG. 7.

$$UV2 = GB||RA||RB$$

$$UV2 = RA||RB||GB||RB$$

$$UV2 = RA||RB||HASH(GB) \quad --- \text{ Expressions (15)}$$

Then, the computer 109B of the receiver-side communication node performs a hash operation on the connecting operation result UV2 obtained by the connection computer 1091 by using the hash computer 1092 of the receiver-side communication node (step S915 of PIG. 8). The hash operation performed herein is the same arithmetic operation that is performed in step S814 of FIG. 7 for obtaining the hash operation result HC2 . Provided that the result of the hash operation is HV2, the hash operation result HV2 is expressed with Expression (16). This hash operation result HV2 corresponds to the second verification value of the receiver-side communication node.

$$HV2 = HASH(UV2) \quad --- \text{ Expression (16)}$$

Then, the computer 109B of the receiver-side communication node compares the second verification value HC2 that is extracted from the received second authentication message with the second verification value HV2 that is obtained by an arithmetic operation by using the comparator 1093 of the receiver-side communication node (step S916 of PIG. 8).

When it is found as a result of the comparison made by the comparator 1093 that the second verification value HC2 and the second verification value HV2 are the same, the second authentication message checking section 105B of the receiver-side communication node judges that verification of the second authentication message is succeeded. When it is found as a result of the comparison made by the comparator 1093 that the second verification value HC2 and the second verification value HV2 are not the same, the second authentication message checking section 105B of the receiver-side communication node judges that verification of the second authentication message is failed.

This example has illustrated the case of creating the first communication identifier and the second communication identifier by using the random number creating device 1094. However, the first communication identifier and the second communication identifier may simply need to be values that change every time those are created, and those identifiers may also be created by using a pseudorandom number creating device, an adder counter, a subtractor counter, or the like.

As described above, the first exemplary exemplary embodiment of the invention performs authentication of the transmitter-side communication node as a connection requesting side and authentication of the receiver-side communication node as a connection standby side not separately but as a single authentication sequence through conducting the authentication on one of the communication nodes as a series of processing by taking the result of authentication conducted on the other communication node into account. This makes it possible for the transmitter-side communication node to check whether or not the receiver-side communication node is a legitimate communication node, while making it possible for the receiver-side communication node to check whether or not the transmitter-side communication node is a legitimate communication node. That is, the continuity in the mutual authentications can be guaranteed. Therefore, it is possible to prevent a risk of having the information leaked to an illegitimate communication node, which may occur when the legitimate communication node responds to a connection request message from the illegitimate communication node to permit a connection.

When the authentications are performed individually from each other as in the case of the related technique, it is necessary to exchange the authentication request and the authentication result thereof between each of the nodes. However, in the first exemplary exemplary embodiment of the invention, a notification of the authentication result conducted in one of the communication nodes also functions as an authentication request on the other communication node side . Thus, it is effective for reducing the number of communications compared to the authentication sequence conducted in the related case. The number of communications in the network is directly related to the amount of power consumption, so that this method that is capable of suppressing the number of communications is more effective when used for sensor nodes and the like which are driven with batteries.

Further, information that each communication node needs to keep permanently in the first exemplary exemplary embodiment of the invention is only the common authenticator data. That is, it is unnecessary to set and register different authenticator data for each communication partner. Thus, even when communications are to be performed with a plurality of communication partners, the information that each communication node needs to keep permanently does not increase in accordance with the number of communication partners. Therefore, even if this method is applied to a communication system that may be connected to a great number of communication nodes, there is no influence on the memory resources of each communication node.

(SECOND EXEMPLARY EXEMPLARY EMBODIMENT)

Next, a modification example of the computer 109 that is used for creating the first authentication message and the second authentication message as well as verification of the first authentication message and the second authentication message in FIG. 1 (FIG. 3) will be described as a second exemplary exemplary embodiment of the invention.

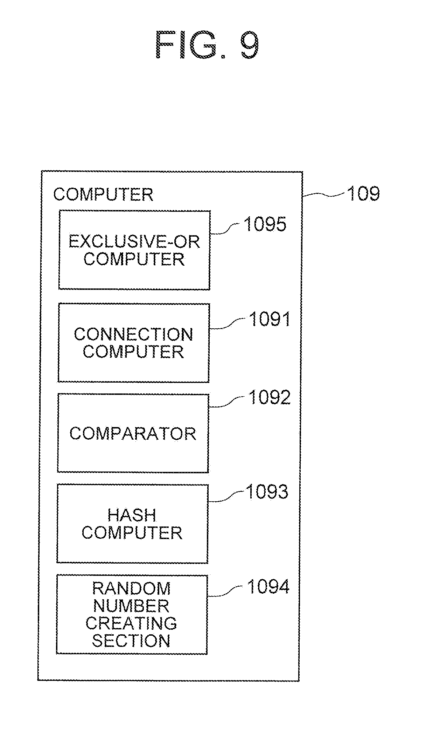

As shown in FIG. 9, a computer 109 according to the second exemplary exemplary embodiment of the invention has a specific feature with respect to the computer 109 shown in FIG. 1 in respect that it has an exclusive-OR computer 1095 in addition. That is, the computer 1095 according to the second exemplary exemplary embodiment of the invention is different from the case of the first exemplary exemplary embodiment shown in FIG. 1 in respect that it employs exclusive-OR operations for creation of the first authentication message, creation of the second authentication message, as well as for the first arithmetic operation and the second arithmetic operation performed at the time of verifications.

Next, operations of the second exemplary exemplary embodiment of the invention will be described by paying attention to the point that is different from the first exemplary exemplary embodiment. Note here that an exclusive-OR operation of data A and data B performed by the exclusive-OR computer 1095 is expressed as "A($\times$)B".

In the second exemplary exemplary embodiment of the invention, a first authentication message creating section 101B of a receiver-side communication node performs an exclusive-OR operation of a first communication identifier RB and authentication data GB by using the exclusive-OR computer 1095 of a computer 109B in step S613 of FIG. 5 which is a first authentication message creating step. Provided that a result of the exclusive-OR operation performed by the exclusive-OR computer 1095 is UC1, the exclusive-OR operation result UC1 is expressed with Expression (17).

$$UC1 = RB(\times)GB \qquad \text{--- Expression (17)}$$

A first authentication message checking section 102A performs an exclusive-OR operation of the first communication identifier RB and authenticator data GA by using the exclusive-OR computer 1095 of a computer 109A in step S713 of FIG. 6 which is a first authentication message checking step. Provided that a result of the exclusive-OR operation performed by the exclusive-OR computer 1095 is UV1, the exclusive-OR operation result UV1 is expressed with Expression (18).

$$UV1 = RB(\times)GA \qquad \text{--- Expression (18)}$$

A second authentication message creating section 103A performs an arithmetic operation of the first communication identifier RB, a second communication identifier RA, and the authenticator data GA by using the exclusive-OR computer 1095 and a hash computer 1092 of the computer 109A in step S813 of FIG. 7 which is a second authentication message creating step. Provided that a result of the arithmetic operation is UC2, the operation result UC2 is expressed with Expression (19).

$$UC2 = HASH(RA)(\times)RB(\times)GA \qquad \text{--- Expression (19)}$$

The second authentication message creating section 103A performs an arithmetic operation of the second communication identifier RA, the first communication identifier RB, and the authenticator data GB by using the exclusive-OR computer 1095 and the hash computer 1092 of the computer 109A in step S914 of FIG. 8 which is a second authentication message checking step. Provided that a result of the arithmetic is UV2, the operation result UV2 is expressed with Expression (20). The hash operations on RA of the operation results UC2 and UV1 will be described later.

$$UV2 = HASH(RA)(\times)RB(\times)GB \qquad \text{--- Expression (20)}$$

With the second exemplary exemplary embodiment of the present invention, it is possible to shorten the data length to which the hash operations (steps S614, 714, 814, 915) are performed for creating the first verification values or the second verification values through utilizing the exclusive-OR operations by the exclusive-OR computer 1095, thereby making it possible to speed up the processing or to reduce the circuit structure of the hash computer 1091.

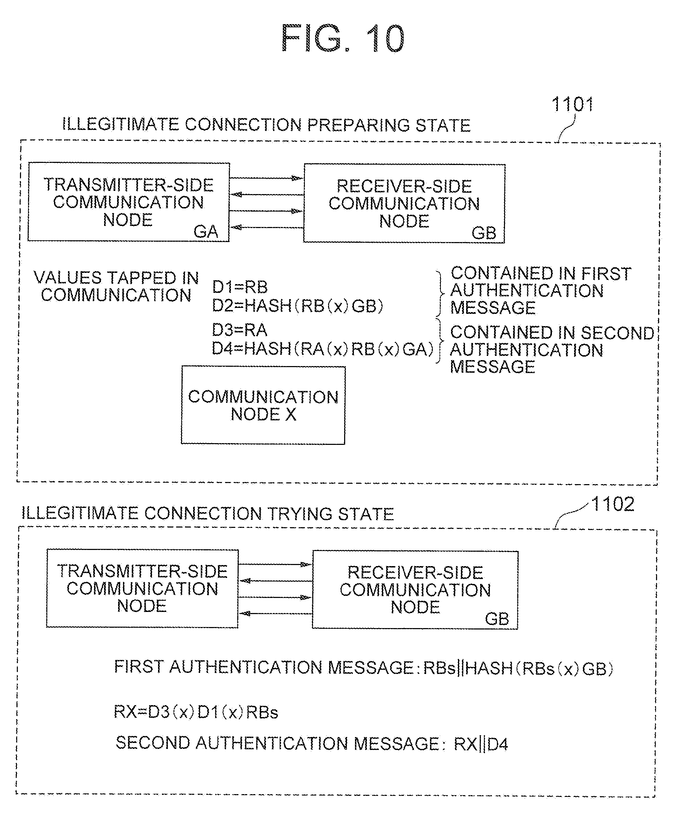

Next, the hash operations for RA of the operation results UC2 and UV1 will be described. FIG. 10 is an illustration for describing a communication state between the communication nodes to which the present invention is applied, in which an illegitimate communication node monitors the communication and tries to pretend as a legitimate communication node, etc. In FIG. 10, legitimate communication nodes A and B are the communication nodes that secretly keep common authenticator data (GA, GB). In the meantime, an illegitimate communication node X is a communication node that tries to connect to the communication node unlawfully, even though it does not know the authenticator data. In FIG. 10, communication state 1101 shows a preparation state for an unlawful connection, and communication state 1102 shows a state when trying to have an unlawful connection.

Now, there is considered a case of obtaining data (operation result UC2) which can be easily created from the second authentication identifier RA and the first communication identifier RB by a calculation shown as Expression (21) in step S813 of FIG. 7 which is a second authentication message creating step.

$$UC2 = RA(\times)RB(\times)GA \qquad \text{--- Expression (21)}$$

In the communication state 1101 shown in FIG. 10, the communication node A and the communication node B can successfully authenticate each other without directly exchanging the common authenticator data held therein. At this time, the communication node X is to be able to monitor a series of communications related to the authentication procedure between the communication node A and the communication node B. Data obtained by this monitoring are following data D1 - D4. D1 and D2 are data obtained by the first authentication message, whereas D3 and D4 are data obtained by the second authentication message.

$$D1 = RB$$

$$D2 = HASH(RB(\times)GB)$$

$$D3 = RAD4 = HASH(RA(\times)RB(\times)GA)$$

The communication node X that has obtained the data (D1 - D4) issues a connection request message to try to be authenticated (communication state 1102).

The communication node X receives a first authentication message MSG1s shown in Expression (22) from the communication node B. Note here that RBs is a first communication identifier created by the communication node B, which is a different value from the first communication identifier RB of the scene 1101.

$$MSG1s = RBs || HASH(RBs(\times)GB) \qquad \text{--- Expression (22)}$$

An issue here is that the communication node X is capable of creating a second authentication message by using the characteristic of an exclusive-OR operation as well as D1, D3, D4, and RBs, even though it is difficult to derive the authenticator data GA and GB from the data D1 - D4 obtained by monitoring the communication in the communication state 1101 due to the characteristic of the hash operation performed by the hash calculator 1092.

The communication node X creates a second authentication message MSG2s by using a calculation shown as Expression (23) .

$$RX = D3(\times)D1(\times)RBs$$

$$MSG2s = RX || D4 \qquad \text{--- Expression (23)}$$

Due to the characteristic of the exclusive-OR operation performed by the exclusive-OR computer 1095, following Expression can be obtained.

$$RX(\times)RBs = D3(\times)D1 = RA(\times)RB(\times) \qquad \text{--- Expression (24)}$$

The communication node X transmits the second authentication message MSG2s created in this manner to the communication node B. Then, the communication node B performs verification of the second authentication message MSG2s that is received from the communication node X.

The value D4 corresponding to the second verification value created by the communication node is as follows.

$$D4 = HASH(RA(\times)RB(\times)GA)$$

$$= HASH(RX(\times)RBs(\times)GA)$$

$$= HASH(RX(\times)RBs(\times)GB) \qquad \text{--- Expression (25)}$$

In the meantime, the second verification value UV2 calculated properly by the communication node B is as follows .

$$UV2 = HASH(RX(\times)RBs(\times)GB) \qquad \text{--- Expression (26)}$$

Therefore, the second verification value D4 contained in the received first authentication message MSG1 matches the second verification value UV2 obtained by the calculation, so that it is successfully authenticated. In this manner, it becomes possible for the communication node X to pretend as the communication node A and successfully receive authentication from the communication node B.

In order to prevent this, the second exemplary embodiment of the invention performs an exclusive-OR operation after performing the hash operation on the first communication identifier RA in step S813 of FIG. 7 which is the step of creating the second authentication message. This makes it difficult for the communication node X to derive RX by the characteristic of the hash operation, even if the communication node X can derive the value corresponding to HASH (RX) by monitoring the communication in the communication state 1101 or the like. Therefore, the communication node X cannot pretend as a legitimate communication node and receive authentication.

As described, it is more preferable for the second arithmetic operation to be an operation which makes it difficult for a communication node that does not know the communicator data to pretend as a legitimate communication node and receive authentication, even if the first authentication message created by the first arithmetic operation is monitored by such communication node.

(THIRD EXEMPLARY EXEMPLARY EMBODIMENT)

Next, a third exemplary exemplary embodiment of the invention will be described.

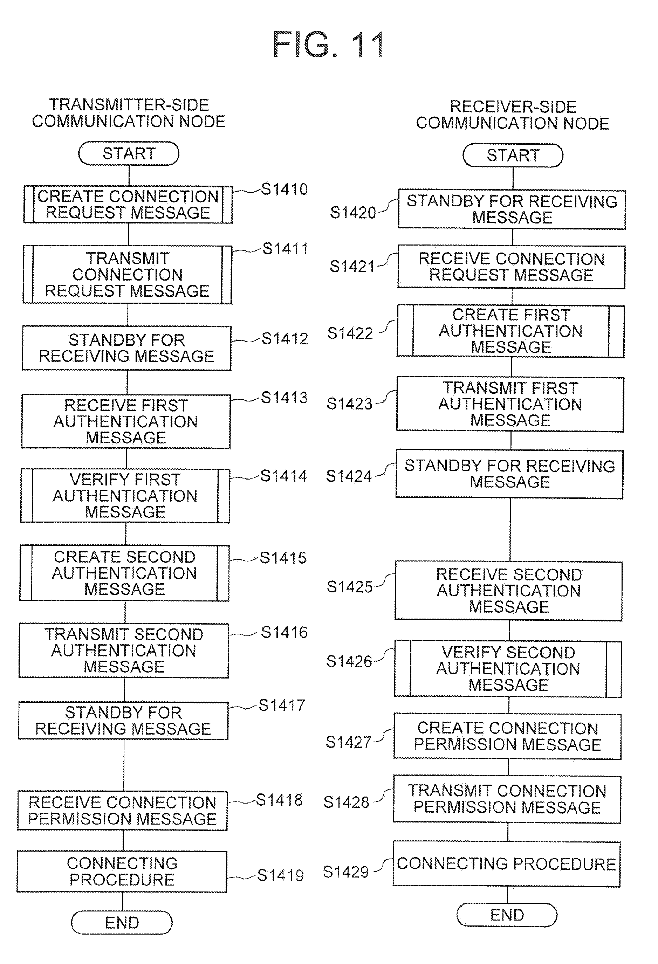

As shown in FIG. 11, the third exemplary embodiment of the invention executes a series of processing from step S1410 to step S1429 with the same structures as those of the first exemplary exemplary embodiment and the second exemplary exemplary embodiment described above. However, the third exemplary exemplary embodiment of the invention is different from the first and second exemplary exemplary embodiments in regards to transmitting/receiving timings of the second communication identifier used when creating/verifying the first authentication message and creating/verifying the second authentication message, the creating/verifying method of the first authentication message, and the creating/verifying method of the second authentication message. Hereinafter, explanations will be provided by paying attention to the points that are different from the first exemplary exemplary embodiment.

In the first exemplary exemplary embodiment of the invention shown in Fig. 3 (FIG. 1), the random number RA as the second communication authenticator is created in step S810 of FIG. 7 after verifying the first authentication message transmitted from the receiver-side communication node.

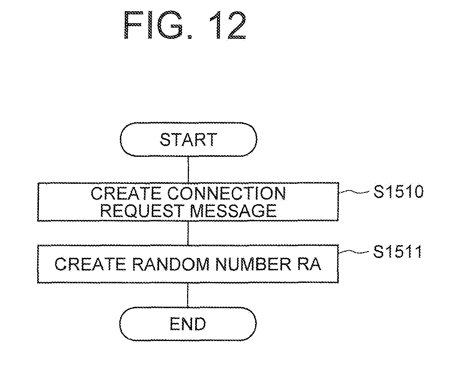

In the meantime, in the third exemplary exemplary embodiment of the invention, a transmitter-side communication node creates the random number RA as the second communication identifier when creating a connection request message, prior to step S810 of FIG. 7. That is, a connection request message creating section 105 of the transmitter-side communication node creates the second communication identifier (RA) by using a random number creating device 1094 of a computer 109 (step S1511 of FIG. 12) when creating the connection request message for making a request to be connected to another communication node (step S1410 of FIG. 11, step S1510 of FIG. 12). The second communication identifier (RA) is for being related (corresponded) to the first authentication message.

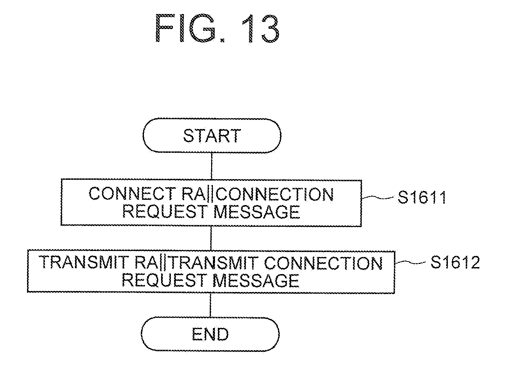

Then, with the third exemplary exemplary embodiment of the invention, a connection request message creating section 101 of the transmitter-side communication node connects the second communication identifier RA to the created connection request message (step S1611 of FIG. 13), and transmits the connected connection request message and the second communication identifier towards the message communication device 20 of the transmitter-side communication node.

Upon receiving the connection request message and the second communication identifier from the connection request message creating section 101, the message communication device 20 of the transmitter-side communication node transmits the information of those towards the receiver-side communication node (step S1411 of FIG. 11, step S1612 of FIG. 13).

When the receiver-side communication node receives the connection request message and the second communication identifier transmitted from the transmitter-side communication node (step S1412 of FIG. 11) in a message-reception standby state (step S1420 of FIG. 11), the first authentication message creating section 102 of the receiver-side communication node creates a first authentication message upon receiving the connection request message and the second communication identifier transmitted from the transmitter-side communication node (step S1422 of FIG. 11).

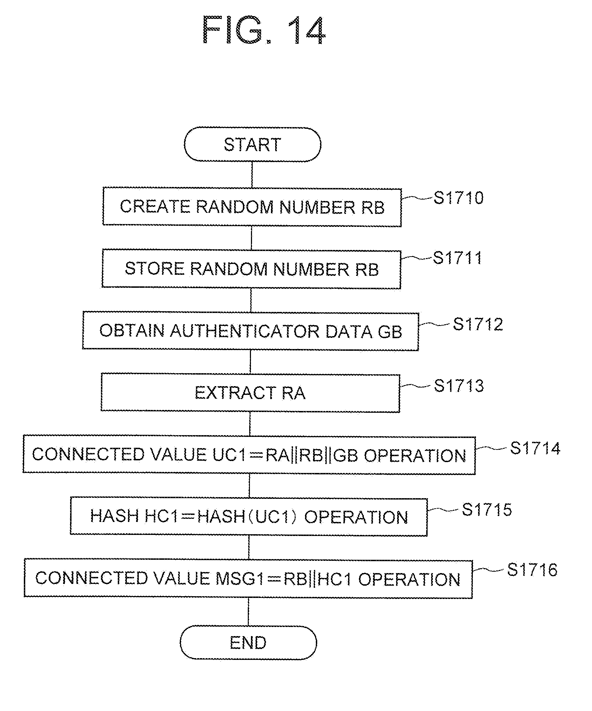

FIG. 14 shows a process of the processing executed when the first authentication message creating section 102 of the receiver-side communication node creates the first authentication message. In FIG. 14, the process of the processing from step S1710 to step S1712 is the same as the process of the processing from step S610 to step S612 of FIG. 5 which are the first authentication message creating steps of the first exemplary exemplary embodiment.

With the third exemplary exemplary embodiment of the invention, the first authentication message creating section 102 uses the computer 109 to extract the second communication identifier RA from the connection request message that is transmitted from the transmitter-side communication node (step S1713 of FIG. 14).

Then, the first authentication message creating section 102 of the receiver-side communication node performs an arithmetic operation of the first communication identifier RB, the second communication identifier RA, and the authentication data GB by using a connection computer 1091 or an exclusive-OR computer 1095 of the computer 109 of the receiver side (step S1714 of FIG. 14). For example, provided that a result of the operation performed by the connection computer 109 or the exclusive-OR computer 1095 is UC1, the operation result UC1 can be expressed as in Expressions (28). Steps S1715 and S1716 of FIG. 14 are the same as steps S614 and S615 of FIG. 5.

$$UC1 = RA||RB||GB$$

$$UC1 = RA(\times)RB||GB$$

$$UC1 = RA||RB(\times)GB$$

$$UC1 = RA(\times)RB(\times)GB \qquad \text{--- Expressions (28)}$$

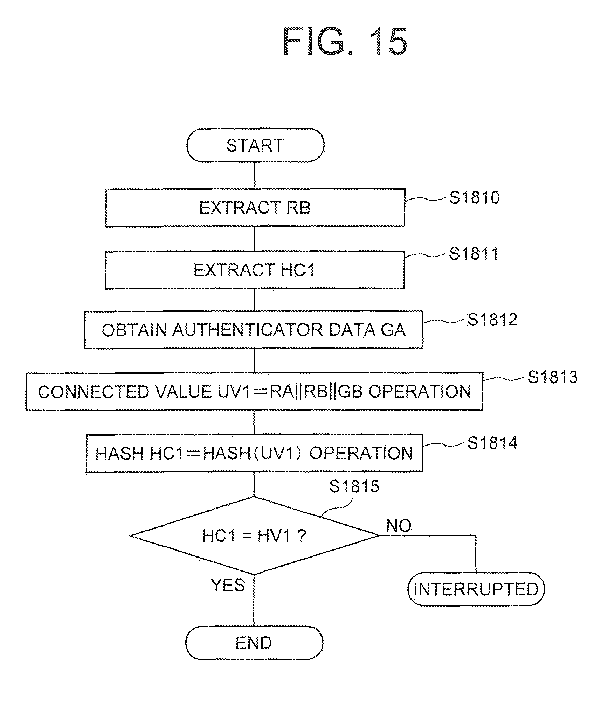

The processing of a first authentication message checking step S1414 shown in FIG. 11 according to the third exemplary exemplary embodiment of the invention is different from the case of the first exemplary exemplary embodiment . That is, the first authentication message checking section 102 of the transmitter-side communication node performs an arithmetic operation of the first communication identifier RB, the second communication identifier RA, and the authentication data GB by using a connection computer 1091 or an exclusive-OR computer 1095 of the computer 109 of the transmitter side (step S1813 of FIG. 15). For example, provided that a result of the operation performed by the connection computer 109 or the exclusive-OR computer 1095 is UV1, the operation result UV1 can be expressed as in Expressions (29). Note here that the arithmetic operation method of UV1 may only need to be in the same operation method as the case of UC1, and Expressions (28) and Expressions (29) are merely presented as a way of examples.

Steps S1810 - S1812 and steps S1814 - S1815 of FIG. 15 are the same as steps S710 - S712 and steps S714 - S715 of FIG. 6 which are the first authentication message checking steps of the first exemplary exemplary embodiment.

$$UV1 = RA||RB||GB$$

$$UV1 = RA(\times)RB||GB$$

$$UV1 = RA||RB(\times)GB$$

$$UV1 = RA(\times)RB(\times)GB \qquad \text{--- Expressions (29)}$$

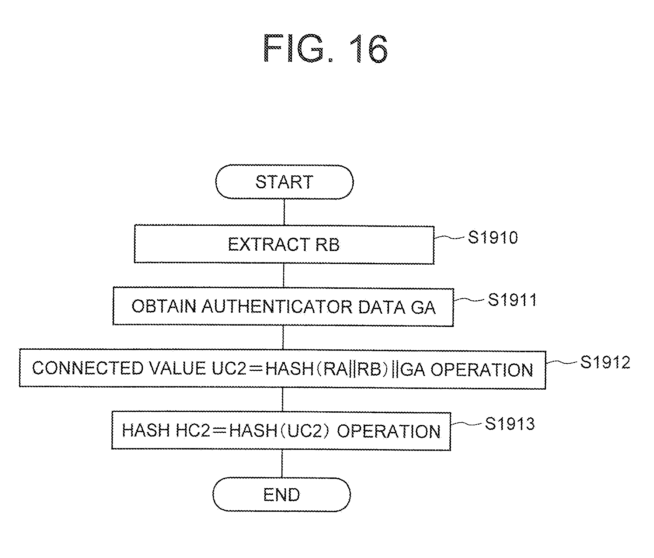

The processing of a second authentication message creating step S1415 shown in FIG. 16 according to the third exemplary embodiment of the invention is different from the case of the first exemplary embodiment. That is, the second authentication message creating section 103 of the receiver-side communication node performs an arithmetic operation of the first communication identifier RB, the second communication identifier RA, and the authenticator data GA by using the connection computer 1091 or the exclusive-OR computer 1095 and a hash calculator 1092 of the computer 109 of the receiver side (step S1912 of FIG. 16). For example, provided that a result of the operation performed by the connection computer 109 or the exclusive-OR computer 1095 and the hash computer 1092 is UC2, the operation result UC2 can be expressed as in Expressions (30).

Steps S1910, S1911, and S1913 of FIG. 16 are the same as steps S811, S812, and S814 of FIG. 7 which are the second authentication message creating steps of the first exemplary embodiment.

$$UC2 = HASH(RA||RB)||GA$$

$$UC2 = HASH(RA||RB)(\times)GA$$

$$UC2 = HASH(RA(\times)RB)||GA$$

$$UC2 = HASH(RA(\times)RB(\times)GA \qquad \text{--- Expressions (30)}$$

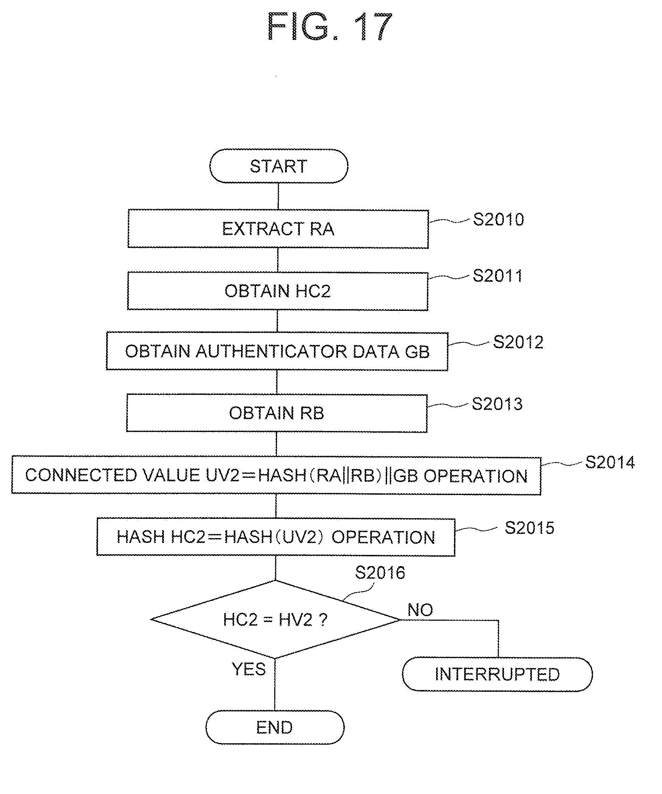

The processing of a second authentication message checking step S1426 shown in FIG. 17 according to the third exemplary embodiment of the present invention is different from the case of the first exemplary embodiment. That is, the second authentication message checking section 104 of the receiver-side communication node performs an arithmetic operation of the first communication identifier RB, the second communication identifier RA, and the authenticator data GB by using the connection computer 1091 or the exclusive-OR computer 1095 and the hash calculator 1092 of the computer 109 of the receiver side (step S2014 of FIG. 17). Provided that a result of the calculation performed by the connection computer 109 or the exclusive-OR computer 1095 and the hash computer 1092 is UV2, the operation result UV2 can be expressed as in Expressions (31), for example. Note here that the arithmetic operation method of UV2 is necessary to be the same calculating method as that of UV2 and different from the arithmetic operation methods of UC1 and UV2 . Expressions (30) and Expressions (31) are merely presented as a way of examples.

The second communication identifier RA transmitted in step S1612 of FIG. 13 is extracted in step S2010 of FIG. 17. The value calculated in step S1913 of FIG. 16 is obtained in step S2011 of FIG. 17. Steps S2012, S2013, S2015, and S2016 of FIG. 17 are the same as steps S912, S913, S915, and S916 of FIG. 8 which are the second authentication message checking steps of the first exemplary embodiment.

$$UV2 = HASH(RA||RB)||GB$$

$$UV2 = HASH(RA||RB)(\times)GB$$

$$UV2 = HASH(RA(\times)RB)||GB$$

$$UV2 = HASH(RA(\times)RB)(\times)GB \qquad \text{--- Expressions (31)}$$

The third exemplary embodiment of the present invention employs the hash operation for the authentication processing, and takes the unidirectional characteristic of the hash operation as the basis of the security. As the input space of the hash operation becomes larger, it becomes more difficult to estimate the original input value from the result of the hash operation. Therefore, in terms of the security, it is preferable for the operation result of the first communication identifier RB and the second communication identifier RA supplied as the inputs of the hash operation to have a space that is as large as the bits can have by using the connecting operation.

Rather than supplying a single communication identifier at the time of creating UC1 as an input of the hash as in the case of the first exemplary embodiment, it is possible to increase the security of the authentication processing by transmitting/receiving the second communication identifier prior to creating the first authentication message and limiting the calculation of the first communication identifier RB and the second communication identifier RA to the connecting operation as in the case of the third exemplary embodiment.

If it is enough to have the security of the same level (i.e., input space L of the same size as the cases of the first exemplary embodiment and the second exemplary embodiment), the bit lengths of the first communication identifier and the communication identifier may be educed to a half of the respective bit lengths, for example, by satisfying the input space L with the bit length after connecting the identifiers, only when the first communication identifier and the second communication identifier are connected by a connecting operation. In addition to reducing each of the bit lengths to one half, it is easily inferred to have modifications, such as reducing the bit length of one of the identifiers to one fourth and the other to three fourth.

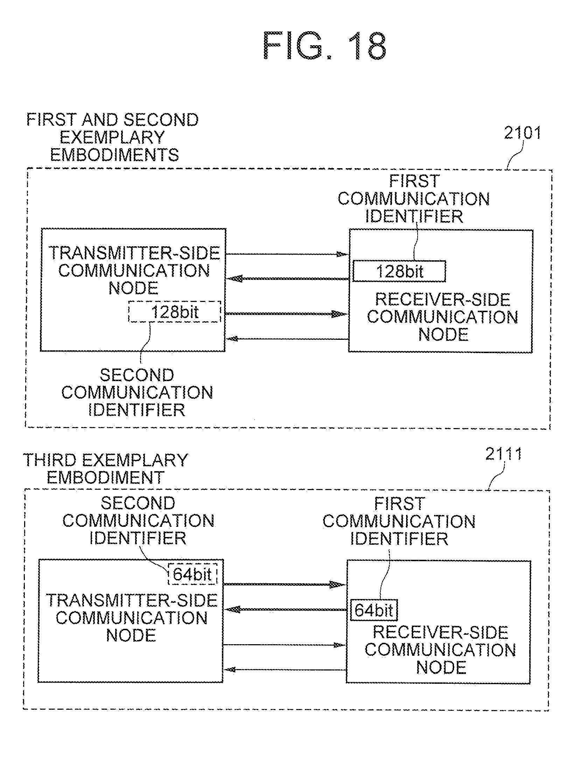

FIG. 18 shows examples of the bit lengths of the communication identifiers, when obtaining the security of the same level as that of the first exemplary embodiment or the second exemplary embodiment.

Communication state 2110 shown in FIG. 18 shows the bit lengths of the first communication identifier and the second communication identifier of the first and second exemplary embodiments. In the communication state 2110, each of the communication identifiers of 128-bit are mutually exchanged between the transmitter-side communication node and the receiver-side communication node.

Communication state 2111 shown in FIG. 18 shows the bit lengths of the first communication identifier and the second communication identifier of the third exemplary embodiment. In the third exemplary embodiment, each of the communication identifiers of 64-bit are mutually exchanged.

As described above, it is possible with the third exemplary embodiment of the present invention to reduce the communication amount. Therefore, the third exemplary embodiment can be preferably applied for being performed under an environment where the reduction in the communication amount is a large factor for lowering the power consumption, such as a sensor network environment.

(FOURTH EXEMPLARY EMBODIMENT)

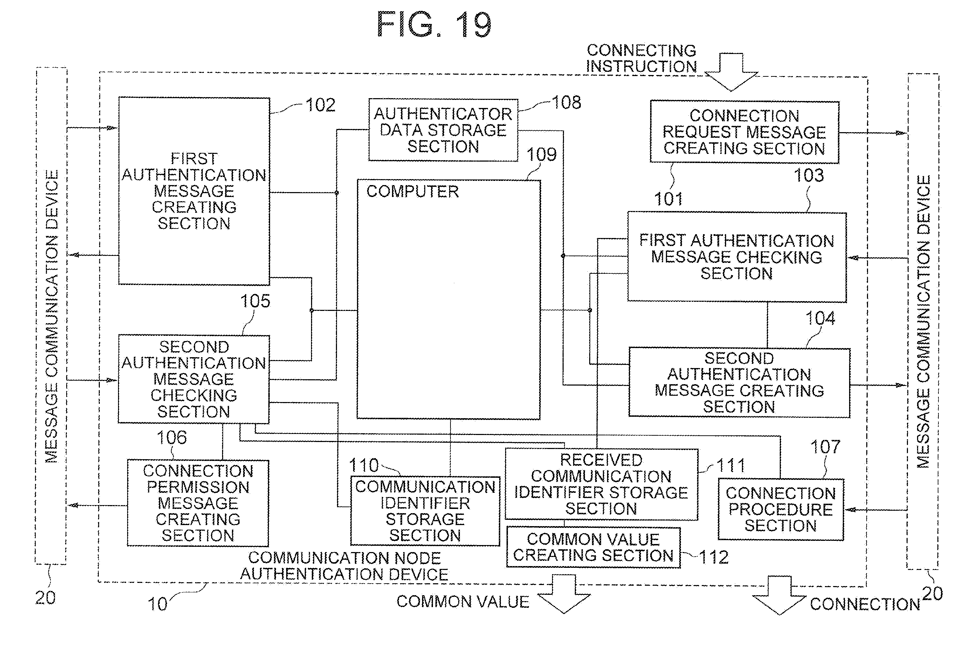

Next, a fourth exemplary embodiment of the present invention will be described. As shown in FIG. 19, the fourth exemplary embodiment of the present invention is different from the first and second exemplary embodiments in respect that it has a received communication identifier storage section 111 and a common value creating section 112. Other features are the same as those of the first exemplary embodiment or the second exemplary embodiment.

As shown in FIG. 19, the fourth exemplary embodiment of the present invention has the received communication identifier 111 and the common value creating section 112, which are provided to correspond to a first authentication message checking section 103 of the transmitter-side communication node and a second authentication message checking section 105 of the receiver-side communication node.

The received communication identifier storage section 111 stores the communication identifier received from the communication-partner communication node that is undergoing an authentication procedure. That is, a received communication identifier storage section 111 of the transmitter-side communication node stores the first communication identifier that is contained in a received first authentication message. The received communication identifier storage section 111 of the receiver-side communication node stores the second communication identifier that is contained in a received second authentication message.

In the fourth exemplary embodiment of the present invention, the communication identifier storage section 110 essentially stores the communication identifier that is created by the communication node authentication device 10 that is undergoing an authentication procedure. That is, the communication identifier storage section 110 of the receiver-side communication node stores the created first communication identifier, and the communication identifier storage section 110 of the transmitter-side communication node stores the created second communication identifier.

That is, the two communication nodes that have completed the authentication procedure are to keep the first communication identifier and the second communication identifier used for the authentication procedure. Therefore, the transmitter-side communication node and the receiver-side communication node share the first communication identifier (RB), the second communication identifier (RA), and authenticator data (GA = GB). The authenticator data are being confirmed as having the same values in the authentication procedure, so that "GA = GB" applies.

The common value creating section 112 creates secret data in common to the two communication nodes that have completed the authentication procedure, which is a common value that can be utilized as an encryption key of encrypted communication performed after the authentication. The common value creating section 112 creates the encryption key by using the information (RB, RA, GA (= GB)) shared by the two communication nodes that have completed the authentication procedure. Provided that a common value is K, it is considered that the common value K can be obtained by calculations as in Expressions (27), for example.

$$K = HASH(RA||RB||GA)$$

$$K = HASH(RA(\times)RB)(\times)GA)$$

$$K = HASH(HASH(RA)(\times)HASH(RB)(\times)GA) \text{ --- Expressions (27)}$$

For the arithmetic operation of the common value K, another arithmetic operation may also be employed as long as it is an operation with which: the value cannot be inferred easily even if the first communication identifier RB and the second communication identifier RA are known; the result of the operation (common value K) varies depending on the first communication identifier RB, the second communication identifier RA, or the authenticator data GA; and the authenticator data GA cannot be easily inferred from the first communication identifier RB, the second communication identifier RA, and the operation result (common value K).

With the fourth exemplary embodiment of the present invention, it is possible to create the common encryption key that can be used only after completing the authentication procedure, through creating the common secret data by using the information shared between the two communication nodes that have completed the authentication procedure. This encryption key is a value that varies for every authentication procedure. Thus, possibilities of having the encrypted communication monitored and having the encryption decrypted can be decreased, thereby making it possible to improve the security.

Next, modification examples of the exemplary embodiments of the present invention will be described one by one.

In the communication node authentication system, it is desirable that:

the second authentication message creating device of the transmitter-side communication node creates the second authentication message based on a first communication identifier that is unpredictable or unreproducible information extracted from the first authentication message, authenticator data held by the transmitter-side communication node, and a second communication identifier that is unpredictable or unreproducible information created by the transmitter-side communication node; and

the second authentication message checking device of the receiver-side communication node performs authentication of the transmitter-side communication node through verifying the second authentication message based on the second authentication message, the second communication identifier extracted from the second authentication message, the first communication identifier used when creating the first authentication message, and authenticator data held by the receiver-side communication node.

It is desirable that:

the second authentication message creating device of the transmitter-side communication node creates the second authentication message containing a second verification value and a second communication identifier based on a first communication identifier which is unpredictable or unreproducible information created by the receiver-side communication node and is also information contained in the first authentication message for identifying the first authentication message, authenticator data held by the transmitter-side communication node, and the second communication identifier that is unpredictable or unreproducible information created by the transmitter-side communication node; and

the second authentication message checking device of the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the second authentication message, the authenticator data held by the receiver-side communication node, and the first communication identifier contained in the first authentication message with the second verification value contained in the second authentication message.

It is desirable that:

the first authentication message creating device of the receiver-side communication node creates the first authentication message which contains the first communication identifier and a first verification value that is created based on authenticator data held by the receiver-side communication node and the first communication identifier created by the receiver-side communication node; and

the first authentication message checking device of the transmitter-side communication node verifies whether or not the first authentication message is an illegitimate first authentication message which is created from same authenticator data as the authenticator data that is held by the transmitter-side communication node, through comparing a result of an arithmetic operation performed based on the first communication identifier contained in the first authentication message and the authenticator data held by the transmitter-side communication node with the first verification value contained in the first authentication message.

It is desirable to further include a connection procedure device, wherein
the connection procedure device starts a mutual connection upon judging that the transmitter-side communication node and the receiver-side communication node keep same authenticator data mutually, only when the first authentication message is verified as being a legitimate message and the second authentication message is verified as being a legitimate message.

It is desirable that:

the second authentication message creating device of the transmitter-side communication node includes
a device for creating random numbers as the second communication identifier,
a device for performing a connecting operation based on the created second communication identifier, the first communication identifier contained in the first authentication message, and the authenticator data held by the transmitter-side communication node, and
a device for performing a hash operation on an operation result obtained by the connecting operation; and
the second authentication message checking device of the receiver-side communication node includes
a device for performing a connecting operation based on the second communication identifier contained in the second authentication message, the first communication identifier held by the receiver-side communication node, and the authenticator data held by the receiver-side communication node,

a device for performing a hash operation on an operation result obtained by the connecting operation, and
a device for comparing an operation result obtained by the hash operation with the second verification value contained in the second authentication message.

It is desirable that:

the first authentication message creating device of the receiver-side communication node includes
a device for creating random numbers as the first communication identifier,
a device for performing a connecting operation based on the created first communication identifier and the authenticator data held by the receiver-side communication node, and
a device for performing a hash operation on an operation result obtained by the connecting operation; and
the first authentication message checking device of the transmitter-side communication node includes
a device for performing a connecting operation based on the first communication identifier contained in the first authentication message and the authenticator data held by the transmitter-side communication node,
a device for performing a hash operation on an operation result obtained by the connecting operation, and
a device for comparing an operation result obtained by the hash operation with the first verification value contained in the first authentication message.

It is desirable that:

the second authentication message creating device of the transmitter-side communication node includes
a device for creating random numbers as the second communication identifier,
a device for performing an exclusive-OR operation based on the created second communication identifier, the first communication identifier contained in the first authentication message, and the authenticator data held by the receiver-side communication node, and
a device for performing a hash operation on an operation result obtained by the exclusive-OR operation; and
the second authentication message checking device of the receiver-side communication node includes
a device for performing an exclusive-OR operation based on the second communication identifier contained in the second authentication message as well as the first communication identifier and the authenticator data held by the receiver-side communication node,
a device for performing a hash operation on an operation result obtained by the exclusive-OR operation, and
a device for comparing an operation result obtained by the hash operation with the second verification value contained in the second authentication message.

It is desirable that:

the first authentication message creating device of the receiver-side communication node includes
a device for creating random numbers as the first communication identifier,
a device for performing an exclusive-OR operation based on the created first communication identifier and the authenticator data held by the receiver-side communication node, and
a device for performing a hash operation on an operation result obtained by the exclusive-OR operation; and
the first authentication message checking device of the transmitter-side communication node includes
a device for performing an exclusive-OR operation based on the first communication identifier contained in the first authentication message and the authenticator data held by the transmitter-side communication node,
a device for performing a hash operation on an operation result obtained by the exclusive-OR operation, and
a device for comparing an operation result obtained by the hash operation with the first verification value contained in the first authentication message.

It is desirable that:

the second authentication message creating device of the transmitter-side communication node creates the second authentication message for authenticating the transmitter-side communication node based on a first communication identifier that is unpredictable or unreproducible information transmitted from the receiver-side communication node, authenticator data held by the transmitter-side communication node, and a second communication identifier; and
the second authentication message checking device of the receiver-side communication node performs authentication of the transmitter-side communication node based on the second authentication message, the second communication identifier that is unpredictable or unreproducible information transmitted from the transmitter-side communication node, the first communication identifier that is unpredictable or unreproducible information transmitted from the receiver-side communication node, and the authenticator data held by the receiver-side communication node.

It is desirable that:

the second authentication message creating device of the transmitter-side communication node creates the second authentication message containing a second verification value that is created based on the second communication identifier that is unpredictable or unreproducible information created by the transmitter-side communication node and contained in the connection request message, the authenticator data held by the transmitter-side communication node, and the first communication identifier that is unpredictable or unreproducible information created by the receiver-side communication node and contained in the first authentication message; and

the second authentication message checking device of the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the connection request message, the authenticator data held by the receiver-side communication node, and the first communication identifier created and held by the receiver-side communication node with the second verification value contained in the second authentication message.

It is desirable that:

the first authentication message creating device of the receiver-side communication node creates the first authentication message which contains a first verification value created based on the authenticator data held by the receiver-side communication node and the second communication identifier contained in the connection request message, and contains the first communication identifier created and held by the receiver-side communication node;

the first authentication message checking device of the transmitter-side communication node verifies whether or not the first authentication message is an illegitimate first authentication message which is created from same authenticator data as the authenticator data that is held by the transmitter-side communication node, through comparing a result of an operation performed based on the second communication identifier contained in the connection request message, the first communication identifier contained in the first authentication message, and the authenticator data held by the transmitter-side communication node with the first verification value contained in the first authentication message; and

the system further includes a connection procedure device which starts a mutual connection upon judging that the transmitter-side communication node and the receiver-side communication node keep same authenticator data mutually, only when the first authentication message is verified as being a legitimate message and the second authentication message is verified as being a legitimate message by the first authentication message checking device.

It is desirable that:

the second authentication message creating device of the transmitter-side communication node includes
a device for performing a connecting operation or an exclusive-OR operation of the second communication identifier contained in the connection request message and the second communication identifier contained in the first authentication message,
a device for performing a hash operation on an operation result obtained by the connecting operation or the exclusive-OR operation,
a device for performing a connecting operation or an exclusive-OR operation of an operation result obtained by the hash operation and the held authenticator data, and
a device for performing a hash operation on an operation result obtained by the connecting operation or the exclusive-OR operation; and
the second authentication message checking device of the receiver-side communication node includes
a device for performing a connecting operation or an exclusive-OR operation of the second communication identifier contained in the connection request message and the first communication identifier held by the receiver-side communication node,
a device for performing a hash operation on an operation result obtained by the connecting operation or the exclusive-OR operation,
a device for performing a connecting operation or an exclusive-OR operation of an operation result obtained by the hash operation and the authenticator data held by the receiver-side communication node,

a device for performing a hash operation on an operation result obtained by the connecting operation or the exclusive-OR operation, and
a device for comparing an operation result obtained by the hash operation with the second verification value contained in the second authentication message.

It is desirable that:

the first authentication message creating device of the receiver-side communication node includes
a device for performing a connecting operation or an exclusive-OR operation of the second communication identifier contained in the connection request message and the first communication identifier contained in the first authentication message,
a device for performing a connecting operation or an exclusive-OR operation of an operation result obtained by the connecting operation or the exclusive-OR operation and the authenticator data held by the receiver-side communication node, and
a device for performing a hash operation on an operation result obtained by the connecting operation or the exclusive-OR operation; and
the first authentication message checking device of the transmitter-side communication node includes
a device for performing a connecting operation or an exclusive-OR operation of the second communication identifier contained in the connection request message and the first communication identifier contained in the first authentication message,
a device for performing a connecting operation or an exclusive-OR operation of an operation result of the connecting operation or the exclusive-OR operation and the authenticator data held by the transmitter-side communication node,
a device for performing a hash operation on an operation result obtained by the connecting operation or the exclusive-OR operation, and
a device for comparing an operation result obtained by the hash operation with the first verification value contained in the first authentication message.

When the first communication identifier and the second communication identifier in the second authentication message creating device, the second authentication message checking device, the first authentication message creating device, and the first authentication message checking device are to be connected by the connecting operation, it is desirable that the bit lengths of the first communication identifier and the second communication identifier are reduced under such a condition that the bit length after connecting the first and the second communication identifiers claimed in any one of claims 1 - 9 becomes equal to or more than the bit lengths of the first communication identifier and the second communication identifier.

It is desirable to further include:

a device for storing the first communication identifier or the second communication identifier received from one of the communication nodes as an authentication target in an authentication procedure; and
a device for creating an encryption key that is used for encrypted communication performed after completing the authentication procedure, based on the first communication identifier or the second communication identifier created by the other communication node in the authentication procedure, the authenticator data, and the received identifier.

When the exemplary embodiment of the present invention is built as a communication node authentication method which starts a communication between communication nodes after performing authentications while having a transmitter-side communication node as one side and a receiver-side communication node as another for communicating with each other, it is desirable that:

the transmitter-side communication node creates the second authentication message based on a first communication identifier that is unpredictable or unreproducible information extracted from the first authentication message, authenticator data held by the transmitter-side communication node, and a second communication identifier that is unpredictable or unreproducible information created by the transmitter-side communication node; and
the receiver-side communication node performs authentication of the transmitter-side communication node through verifying the second authentication message based on the second authentication message, the second communication identifier extracted from the second authentication message, the first communication identifier used when creating the first authentication message, and authenticator data held by the receiver-side communication node.

It is desirable that:

the transmitter-side communication node creates the second authentication message containing a second verification value and a second communication identifier based on a first communication identifier which is unpredictable or unreproducible information created by the receiver-side communication node and is also information contained in the first authentication message for identifying the first authentication message, authenticator data held by the transmitter-side communication node, and a second communication identifier that is unpredictable or unreproducible information created by the transmitter-side communication node; and

the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the second authentication message, the authenticator data held by the authenticator data, and the first communication identifier contained in the first authentication message with the second verification value contained in the second authentication message.

It is desirable that:

the receiver-side communication node creates the first authentication message which contains a first communication identifier and a first verification value that is created based on authenticator data held by the receiver-side communication node and the first communication identifier created by the receiver-side communication node; and

the transmitter-side communication node verifies whether or not the first authentication message is an illegitimate first authentication message which is created from same authenticator data as the authenticator data that is held by the transmitter-side communication node, through comparing a result of an arithmetic operation performed based on the first communication identifier contained in the first authentication message and the authenticator data held by the transmitter-side communication node with the first verification value contained in the first authentication message.

It is desirable to start a mutual connection upon judging that the transmitter-side communication node and the receiver-side communication node keep same authenticator data mutually, only when the first authentication message is verified as being a legitimate message and the second authentication message is verified as being a legitimate message.

It is desirable that:

the transmitter-side communication node creates random numbers as the second communication identifier, performs a connecting operation based on the created second communication identifier, the first communication identifier contained in the first authentication message, and the authenticator data held by the transmitter-side communication node, and performs a hash operation on an operation result obtained by the connecting operation; and

the receiver-side communication node performs a connecting operation based on the second communication identifier contained in the second authentication message, the first communication identifier contained held by the receiver-side communication node, and the authenticator data held by the receiver-side communication node, performs a hash operation on an operation result obtained by the connecting operation, and compares an operation result obtained by the hash operation with the second verification value contained in the second authentication message.

It is desirable that:

the receiver-side communication node creates random numbers as the first communication identifier, performs a connecting operation based on the created first communication identifier and the authenticator data held by the receiver-side communication node, and performs a hash operation on an operation result obtained by the connecting operation; and

the transmitter-side communication node performs a connecting operation based on the first communication identifier contained in the first authentication message and the authenticator data held by the transmitter-side communication node, performs a hash operation on an operation result obtained by the connecting operation, and compares an operation result obtained by the hash operation with the first verification value contained in the first authentication message.

It is desirable that:

the transmitter-side communication node creates random numbers as the second communication identifier, performs an exclusive-OR operation based on the created second communication identifier, the first communication identifier contained in the first authentication message, and the authenticator data held by the receiver-side communication node, and performs a hash operation on an operation result obtained by the exclusive-OR operation; and

the receiver-side communication node performs an exclusive-OR operation based on the second communication identifier contained in the second authentication message as well as the first communication identifier and the authenticator data held by the receiver-side communication node, performs a hash operation on an operation result obtained by the exclusive-OR operation, and compares an operation result obtained by the hash operation with the second verification value contained in the second authentication message.

It is desirable that:

the receiver-side communication node creates random numbers as the first communication identifier, performs an exclusive-OR operation based on the created first communication identifier and the authenticator data held by the receiver-side communication node, and performs a hash operation on an operation result obtained by the exclusive-OR operation; and

the transmitter-side communication node performs an exclusive-OR operation based on the first communication identifier contained in the first authentication message and the authenticator data held by the transmitter-side communication node, performs a hash operation on an operation result obtained by the exclusive-OR operation, and compares an operation result obtained by the hash operation with the first verification value contained in the first authentication message.

It is desirable that:

the transmitter-side communication node creates the second authentication message for authenticating the transmitter-side communication node based on a first communication identifier that is unpredictable or unreproducible information transmitted from the receiver-side communication node, authenticator data held by the transmitter-side communication node, and a second communication identifier; and

the receiver-side communication node performs authentication of the transmitter-side communication node based on the second authentication message, the second communication identifier that is unpredictable or unreproducible information transmitted from the transmitter-side communication node, the first communication identifier that is unpredictable or unreproducible information transmitted from the receiver-side communication node, and the authenticator data held by the receiver-side communication node.

It is desirable that:

the transmitter-side communication node creates the second authentication message containing a second verification value that is created based on the communication identifier that is unpredictable or unreproducible information created by the transmitter-side communication node and contained in the connection request message, authenticator data held by the transmitter-side communication node, and the first communication identifier that is unpredictable or unreproducible information created by the receiver-side communication node and contained in the first authentication message; and

the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the connection request message, the authenticator data held by the receiver-side communication node, and the first communication identifier created and held by the receiver-side communication node with the second verification value contained in the second authentication message.

It is desirable that:

the receiver-side communication node creates the first authentication message which contains the first verification value created based on the authenticator data held by the receiver-side communication node and the second communication identifier contained in the connection request message, and contains the first communication identifier created and held by the receiver-side communication node;

the transmitter-side communication node verifies whether or not the first authentication message is an illegitimate first authentication message which is created from same authenticator data as the authenticator data that is held by the transmitter-side communication node, through comparing a result of an arithmetic operation performed based on the second communication identifier contained in the connection request message, the first communication identifier contained in the first authentication message, and the authenticator data held by the transmitter-side communication node with the first verification value contained in the first authentication message; and
a mutual connection is started upon judging that the transmitter-side communication node and the receiver-side communication node keep same authenticator data mutually, only when the first authentication message is verified as being a legitimate message and the second authentication message is verified as being a legitimate message by the first authentication message checking device.

It is desirable that:

the transmitter-side communication node performs a connecting operation or an exclusive-OR operation of the second communication identifier contained in the connection request message and the second communication identifier contained in the first authentication message, performs a hash operation on an operation result obtained by the connecting operation or the exclusive-OR operation, performs a connecting operation or an exclusive-OR operation of an operation result obtained by the hash operation and the held authenticator data, and performs a hash operation on an operation result obtained by the connecting operation or the exclusive-OR operation; and
the receiver-side communication node performs a connecting operation or an exclusive-OR operation of the second communication identifier contained in the connection request message and the first communication identifier held by the receiver-side communication node, performs a hash operation on an operation result obtained by the connecting operation or the exclusive-OR operation, performs a connecting operation or an exclusive-OR operation of an operation result obtained by the hash operation and the authenticator data held by the receiver-side communication node, performs a hash operation on an operation result obtained by the connecting operation or the exclusive-OR operation, and compares an operation result obtained by the hash operation with the second verification value contained in the second authentication message.

It is desirable that:

the receiver-side communication node performs a connecting operation or an exclusive-OR operation of the second communication identifier contained in the connection request message and the first communication identifier contained in the first authentication message, performs a connecting operation or an exclusive-OR operation of an operation result obtained by the connecting operation or the exclusive-OR operation and the authenticator data held by the receiver-side communication node, and performs a hash operation on an operation result obtained by the connecting operation or the exclusive-OR operation; and
the transmitter-side communication node performs a connecting operation or an exclusive-OR operation of the second communication identifier contained in the connection request message and the first communication identifier contained in the first authentication message, performs a connecting operation or an exclusive-OR operation of an operation result obtained by the connecting operation or the exclusive-OR operation and the authenticator data held by the transmitter-side communication node, performs a hash operation on an operation result obtained by the connecting operation or the exclusive-OR operation, and compares an operation result obtained by the hash operation with the first verification value contained in the first authentication message.

When the first communication identifier and the second communication identifier in creating processing of the second authentication message, checking processing of the second authentication message, creating processing of the first authentication message, and checking processing of the first authentication message are to be connected by the connecting operation, it is desirable that the bit length of connected data string is reduced under such a condition that the bit length becomes equal to or more than the bit length of the first communication identifier or the second communication identifier before being connected.
It is desirable to:

store the first communication identifier or the second communication identifier received from one of the communication nodes as an authentication target in an authentication procedure; and
create an encryption key that is used for encrypted communication performed after completing the authentication procedure, based on the first communication identifier or the second communication identifier created by the other communication node in the authentication procedure, the authenticator data, and the received identifier.

It is desirable to allow:

the computer that configures the transmitter-side communication node to execute a function of creating the second authentication message based on a first communication identifier that is unpredictable or unreproducible information extracted from the first authentication message, authenticator data held by the transmitter-side communication node, and a second communication identifier that is unpredictable or unreproducible information created by the transmitter-side communication node; and

the computer that configures the receiver-side communication node to execute a function of performing authentication of the transmitter-side communication node through verifying the second authentication message based on the second authentication message, the second communication identifier extracted from the second authentication message, the first communication identifier used when creating the first authentication message, and authenticator data held by the receiver-side communication node.

It is desirable to allow:

the computer that configures the transmitter-side communication node to execute a function of creating the second authentication message containing a second verification value and a second communication identifier based on a first communication identifier which is unpredictable or unreproducible information created by the receiver-side communication node and is also information contained in the first authentication message for identifying the first authentication message, authenticator data held by the transmitter-side communication node, and a second communication identifier that is unpredictable or unreproducible information created by the transmitter-side communication node; and

the computer that configures the receiver-side communication node to execute a function of verifying whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the second authentication message, the authenticator data held by the receiver-side communication node, and the first communication identifier contained in the first authentication message with the second verification value contained in the second authentication message.

It is desirable to allow:

the computer that configures the receiver-side communication node to execute a function of creating the first authentication message which contains a first communication identifier and a first verification value that is created based on authenticator data held by the receiver-side communication node and the first communication identifier created by the receiver-side communication node; and

the computer that configures the transmitter-side communication node to execute a function of verifying whether or not the first authentication message is an illegitimate first authentication message which is created from same authenticator data as the authenticator data that is held by the transmitter-side communication node, through comparing a result of an arithmetic operation performed based on the first communication identifier contained in the first authentication message and the authenticator data held by the transmitter-side communication node with the first verification value contained in the first authentication message.

It is desirable to allow the respective computers that configure the receiver-side communication node and the transmitter-side communication node to execute a function of starting a mutual connection upon judging that the transmitter-side communication node and the receiver-side communication node keep same authenticator data mutually, only when the first authentication message is verified as being a legitimate message and the second authentication message is verified as being a legitimate message.

It is desirable to allow:

the computer that configures the transmitter-side communication node to execute
a function of creating random numbers as the second communication identifier,
a function of performing a connecting operation based on the created second communication identifier, the first communication identifier contained in the first authentication message, and the authenticator data held by the transmitter-side communication node, and
a function of performing a hash operation on an operation result obtained by the connecting operation; and
the computer that configures the receiver-side communication node to execute
a function of performing a connecting operation based on the second communication identifier contained in the second authentication message, the first communication identifier held by the receiver-side communication node, and the authenticator data held by the receiver-side communication node,
a function of performing a hash operation on an operation result obtained by the connecting operation, and
a function of comparing an operation result obtained by the hash operation with the second verification value contained in the second authentication message.

It is desirable to allow:

the computer that configures the receiver-side communication node to execute
a function of creating random numbers as the first communication identifier,
a function of performing a connecting operation based on the created first communication identifier and the authenticator data held by the receiver-side communication node, and
a function of performing a hash operation on an operation result obtained by the connecting operation; and
the computer that configures the transmitter-side communication node to execute
a function of performing a connecting operation based on the first communication identifier contained in the first authentication message and the authenticator data held by the transmitter-side communication node,
a function of performing a hash operation on an operation result obtained by the connecting operation, and
a function of comparing an operation result obtained by the hash operation with the first verification value contained in the first authentication message.

It is desirable to allow:

the computer that configures the transmitter-side communication node to execute
a function of creating random numbers as the second communication identifier,
a function of performing an exclusive-OR operation based on the created second communication identifier, the first communication identifier contained in the first authentication message, and the authenticator data held by the receiver-side communication node, and
a. function of performing a hash operation on an operation result obtained by the exclusive-OR operation; and
the computer that configures the receiver-side communication node to execute
a function of performing an exclusive-OR operation based on the second communication identifier contained in the second authentication message as well as the first communication identifier and the authenticator data held by the receiver-side communication node,
a function of performing a hash operation on an operation result obtained by the exclusive-OR operation, and
a function of comparing an operation result obtained by the hash operation with the second verification value contained in the second authentication message.

It is desirable to allow:

the computer that configures the receiver-side communication node to execute
a function of creating random numbers as the first communication identifier,
a function of performing an exclusive-OR operation based on the created first communication identifier and the authenticator data held by the receiver-side communication node, and
a function of performing a hash operation on an operation result obtained by the exclusive-OR operation; and
the computer that configures the transmitter-side communication node to execute
a function of performing an exclusive-OR operation based on the first communication identifier contained in the first authentication message and the authenticator data held by the transmitter-side communication node,
a function of performing a hash operation on an operation result obtained by the exclusive-OR operation, and
a function of comparing an operation result obtained by the hash operation with the first verification value contained in the first authentication message.

It is desirable to allow:

the computer that configures the transmitter-side communication node to execute a function of creating the second authentication message for authenticating the transmitter-side communication node based on the first communication identifier that is unpredictable or unreproducible information transmitted from the receiver-side communication node, the authenticator data held by the transmitter-side communication node, and the second communication identifier; and
the computer that configures the receiver-side communication node to execute a function of performing authentication of the transmitter-side communication node based on the second authentication message, the second communication identifier that is unpredictable or unreproducible information transmitted from the transmitter-side communication node, the first communication identifier that is unpredictable or unreproducible information transmitted from the receiver-side communication node, and the authenticator data held by the receiver-side communication node.

It is desirable to allow:

the computer that configures the transmitter-side communication node to execute a function of creating the second authentication message containing a second verification value that is created based on the second communication identifier that is unpredictable or unreproducible information created by the transmitter-side communication node and contained in the connection request message, the authenticator data held by the transmitter-side communication node, and the first communication identifier that is unpredictable or unreproducible information created by the receiver-side communication node and contained in the first authentication message; and

the computer that configures the receiver-side communication node to execute a function of verifying whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the connection request message, the authenticator data held by the receiver-side communication node, and the first communication identifier created and held by the receiver-side communication node with the second verification value contained in the second authentication message.

It is desirable to allow:

the computer that configures the receiver-side communication node to execute a function of creating the first authentication message which contains a first verification value created based on the authenticator data held by the receiver-side communication node and the first communication identifier created and held by the receiver-side communication node;

the computer that configures the transmitter-side communication node to execute a function of verifying whether or not the first authentication message is an illegitimate first authentication message which is created from same authenticator data as the authenticator data that is held by the transmitter-side communication node, through comparing a result of an arithmetic operation performed based on the second communication identifier contained in the connection request message, the first communication identifier contained in the first authentication message, and the authenticator data held by the transmitter-side communication node with the first verification value contained in the first authentication message; and

the respective computers that configure the receiver-side communication node and the transmitter-side communication node to execute a function of starting a mutual connection upon judging that the transmitter-side communication node and the receiver-side communication node keep same authenticator data mutually, only when the first authentication message is verified as being a legitimate message and the second authentication message is verified as being a legitimate message.

It is desirable to allow:

the computer that configures the transmitter-side communication node to execute
a function of performing a connecting operation or an exclusive-OR operation of the second communication identifier contained in the connection request message and the second communication identifier contained in the first authentication message,
a function of performing a hash operation on an operation result obtained by the connecting operation or the exclusive-OR operation,
a function of performing a connecting operation or an exclusive-OR operation of an operation result obtained by the hash operation and the held authenticator data, and
a function of performing a hash operation on an operation result obtained by the connecting operation or the exclusive-OR operation; and
the computer that configures the receiver-side communication node to execute
a function of performing a connecting operation or an exclusive-OR operation of the second communication identifier contained in the connection request message and the first communication identifier held by the receiver-side communication node,
a function of performing a hash operation on an operation result obtained by the connecting operation or the exclusive-OR operation,
a function of performing a connecting operation or an exclusive-OR operation of an operation result obtained by the hash operation and the authenticator data held by the receiver-side communication node,
a function of performing a hash operation on an operation result obtained by the connecting operation or the exclusive-OR operation, and
a function of comparing an operation result obtained by the hash operation with the second verification value contained in the second authentication message.

It is desirable to allow:

the computer that configures the receiver-side communication node to execute
a function of performing a connecting operation or an exclusive-OR operation of the second communication identifier contained in the connection request message and the first communication identifier contained in the first authentication message,
a function of performing a connecting operation or an exclusive-OR operation of an operation result obtained by the connecting operation or the exclusive-OR operation and the authenticator data held by the receiver-side communication node, and
a function of performing a hash operation on an operation result obtained by the connecting operation or the exclusive-OR operation; and
the computer that configures the transmitter-side communication node to execute
a function of performing a connecting operation or an exclusive-OR operation of the second communication identifier contained in the connection request message and the first communication identifier contained in the first authentication message,
a function of performing a connecting operation or an exclusive-OR operation of a result of an arithmetic operation of the connecting operation or the exclusive-OR operation and the authenticator data held by the receiver-side communication node,
a function of performing a hash operation on an operation result obtained by the connecting operation or the exclusive-OR operation, and
a function of comparing an operation result obtained by the hash operation with the first verification value contained in the first authentication message.

When the first communication identifier and the second communication identifier in creation of the second authentication message, verification of the second authentication message, creation of the first authentication message, and verification of the first authentication message are to be connected by the connecting operation, it is desirable that the bit length of connected data string is reduced under such a condition that the bit length becomes equal to or more than the bit length of the first communication identifier or the second communication identifier before being connected.

It is desirable to allow the computer to:

store the first communications identifier or the second communication identifier received from one of the communication nodes as an authentication target in an authentication procedure; and
execute a function of creating an encryption key that is used for encrypted communication performed after completing the authentication procedure, based on the first communication identifier or the second communication identifier created by the other communication node in the authentication procedure, the authenticator data, and the received identifier.

It is desirable to allow a computer, which configures a communication node authentication device used for a communication node system which starts a communication between communication nodes after performing authentications, to execute:

a function of creating a first authentication message in response to a connection request message that is transmitted from a communication node to be a transmitter side; and
a function of verifying a second authentication message that is transmitted from the communication node to be the transmitter side.

It is desirable to allow a computer, which configures a communication node authentication device used for a communication node system which starts a communication between communication nodes after performing authentications, to execute:

a function of verifying the first authentication message that is transmitted from a communication node to be a receiver side; and
a function of creating a second authentication message for authenticating the transmitter-side communication node based on a verification result obtained by the first authentication message checking device.

INDUSTRIAL APPLICABILITY

The present Invention can be preferably applied to sensor nodes that configure a sensor network in which the sensor nodes mutually perform authentications. Further, the present invention can also be applied to ubiquitous devices that configure a ubiquitous system in which the ubiquitous devices mutually perform authentications.

Furthermore, it is possible with the present invention to sufficiently minimize the arithmetic operation circuit required for the computer through shortening the data length of the data to be operated, so that it can be formed by suppressing an increase in the chip area of a radio communication LSI to minimum, for example. It is also possible to reduce the program size and the communication data length when the communication node authentication program according to the present invention is executed by a microprocessor loaded on the sensor node or the ubiquitous device. As a result, the power required for maintaining the memory and for arithmetic operations of the microprocessor can be reduced. Therefore, the present invention can be preferably applied to the sensor nodes and the ubiquitous devices that are operated for a long time with limited power supply resources such as batteries.

BRIEF DESCRIPTION OF THE DRAWINGS

FIG. 1 is a block diagram showing a structure of a communication node to which a communication node authentication device according to a first exemplary embodiment of the present invention is loaded;
FIG. 2 is a block diagram which illustrates the communication node authentication device shown in FIG. 1 by dividing it in terms of functions;
FIG. 3 is a block diagram showing structures of a transmitter-side communication node and a receiver-side communication node to which a communication node authentication device according to a second exemplary embodiment of the present invention is loaded;
FIG. 4 is a flowchart showing an operation example of the communication node authentication device according to the second exemplary embodiment of the present invention;
FIG. 5 is a flowchart showing a process of processing for creating a first authentication message in the communication node authentication device according to the second exemplary embodiment of the present invention;
FIG. 6 is a flowchart showing a process of processing for verifying the first authentication message in the communication node authentication device according to the second exemplary embodiment of the present invention;
FIG. 7 is a flowchart shewing a process of processing for creating a second authentication message in the communication node authentication device according to the second exemplary embodiment of the present invention;
FIG. 8 is a flowchart showing a process of processing for verifying the second authentication message in the communications node authentication device according to the second exemplary embodiment of the present invention;
FIG. 9 is a block diagram showing a modification example of a computer that is included in the communication node authentication devices according to the first and second exemplary embodiments of the present invention;
FIG. 10 is an explanatory diagram showing, in a comparative manner, a communicating state between communication nodes to which the exemplary embodiment of the present invention is applied and a communicating state between communication nodes to which the exemplary embodiment is not applied;
FIG. 11 is a flowchart showing an operation example of a communication node authentication device according to a third exemplary embodiment of the present invention;
FIG. 12 is a flowchart showing a concretive operation example of a case when creating a connection request message in the communication node authentication device according to the third exemplary embodiment of the present invention;
FIG. 13 is a flowchart showing a concretive operation example of a case when transmitting the connection request message in the communication node authentication device according to the third exemplary embodiment of the present invention;
FIG. 14 is a flowchart showing a concretive operation example of a case when creating a first authentication message in the communication node authentication device according to the third exemplary embodiment of the present invention;
FIG. 15 is a flowchart showing a concretive operation example of a case when verifying the first authentications message in the communication node authentication device according to the third exemplary embodiment of the present invention;
FIG. 16 is a flowchart showing a concretive operation example of a case when creating a second authentications message in the communication node authentication device according to the third exemplary embodiment of the present invention;
FIG. 17 is a flowchart showing a concretive operation example of a case when verifying the second authentication message in the communication node authentication device according to the third exemplary embodiment of the present invention;

FIG. 18 is an explanatory diagram showing examples of the bit lengths of communication identifiers according to the first and second exemplary embodiments as well as the third exemplary embodiment of the present invention;

FIG. 19 is a block diagram showing a structure of a communication node authentication device according to a fourth exemplary embodiment of the present invention; and

FIG. 20 is an explanatory diagram showing an example of a related communication node authentication method.

REFERENCE NUMERALS

| 10 | Communication node authentication device |
|---|---|
| 101 | First authentication message creating section |
| 102 | First authentication message verifying section |
| 103 | Second authentication message creating section |
| 104 | Second authentication message verifying section |
| 105 | Connection request message creating section |
| 106 | Connection permission message creating section |
| 107 | Connection procedure section |
| 108 | Authenticator data storage section |
| 109 | Computer |
| 110 | Communication identifier storage section |
| 111 | Received communication identifier |
| 112 | Common value creating section |
| 20 | Message communication device |

**Claims**

1. A communication node authentication system which starts a communication between communication nodes after performing authentication while having a transmitter-side communication node as one side and a receiver-side communication node as another for communicating with each other, wherein:

the receiver-side communication node includes
a first authentication message creating device which creates a first authentication message in response to a connection request message that is transmitted from the transmitter-side communication node, and
a second authentication message checking device which verifies a second authentication message that is transmitted from the transmitter-side communication node; and
the transmitter-side communication node includes
a first authentication message checking device which verifies the first authentication message that is transmitted from the receiver-side communication node, and
a second authentication message creating device which creates the second authentication message based on a verification result obtained by the first authentication message checking device.

2. The communication node authentication system as claimed in claim 1, wherein:

the second authentication message cremating device of the transmitter-side communication node creates the second authentication message based on a first communication identifier that is unpredictable or unreproducible information extracted from the first authentication message, authenticator data held by the transmitter-side communication node, and a second communication identifier that is unpredictable or unreproducible information created by the transmitter-side communication node; and
the second authentication message checking device of the receiver-side communication node performs authentication of the transmitter-side communication node through verifying the second authentication message based on the second authentication message, the second communication identifier extracted from the second authentication message, the first communication identifier used when creating the first authentication message, and authenticator data held by the receiver-side communication node.

**3.** The communication node authentication system as claimed in claim 1, wherein:

the second authentication message creating device of the transmitter-side communication node creates the second authentication message containing a second verification value and a second communication identifier based on a first communication identifier which is unpredictable or unreproducible information created by the receiver-side communication node and is also information contained in the first authentication message for identifying the first authentication message, authenticator data held by the transmitter-side communication node, and the second communication identifier that is unpredictable or unreproducible information created by the transmitter-side communication node; and

the second authentication message checking device of the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the second authentication message, the authenticator data held by the receiver-side communication node, and the first communication identifier contained in the first authentication message with the second verification value contained in the second authentication message.

**4.** The communication node authentication system as claimed in claim 1, wherein:

the first authentication message creating device of the receiver-side communication node creates the first authentication message which contains the first communication identifier and a first verification value that is created based on authenticator data held by the receiver-side communication node and the first communication identifier created by the receiver-side communication node; and

the first authentication message checking device of the transmitter- side communication node verifies whether or not the first authentication message is an illegitimate first authentication message which is created from same authenticator data as the authenticator data that is held by the transmitter-side communication node, through comparing a result of an arithmetic operation performed based on the first communication identifier contained in the first authentications message and the authenticator data held by the transmitter-side communication node with the first verification value contained in the first authentication message.

**5.** The communication node authentication system as claimed in claim 1, further comprising a connection procedure device, wherein

the connection procedure device starts a mutual connection upon judging that the transmitter-side communication node and the receiver-side communication node keep same authenticator data mutually, only when the first authentication message is verified as being a legitimate message and the second authentication message is verified as being a legitimate message.

**6.** The communication node authentication system as claimed in claim 2 or claim 3, wherein:

the second authentication message creating device of the transmitter-side communication node includes
a device for creating random numbers as the second communication identifier,
a device for performing a connecting operation based on the created second communication identifier, the first communication identifier contained in the first authentication message, and the authenticator data held by the transmitter-side communication node, and
a device for performing a hash operation on an operation result obtained by the connecting operation; and
the second authentication message checking device of the receiver-side communication node includes
a device for performing a connecting operation based on the second communication identifier contained in the second authentication message, the first communication identifier held by the receiver-side communication node, and the authenticator data held by the receiver-side communication node,
a device for performing a hash operation on an operation result obtained by the connecting operation, and
a device for comparing an operation result obtained by the hash operation with the second verification value contained in the second authentication message.

**7.** The communication node authentication system as claimed in claim 4, wherein:

the first authentication message creating device of the receiver-side communication node includes
a device for creating random numbers as the first communication identifier,

a device for performing a connecting operation based on the created first communication identifier and the authenticator data held by the receiver-side communication node, and
a device for performing a hash operation on an operation result obtained by the connecting operation; and
the first authentication message checking device of the transmitter-side communication node includes
a device for performing a connecting operation based on the first communication identifier contained in the first authentication message and the authenticator data held by the transmitter-side communication node,
a device for performing a hash operation on an operation result obtained by the connecting operation, and
a device for comparing an operation result obtained by the hash operation with the first verification value contained in the first authentication message.

8. The communication node authentication system as claimed in claim 2 or claim 3, wherein:

the second authentication message creating device of the transmitter-side communication node includes
a device for creating random numbers as the second communication identifier,
a device for performing an exclusive-OR operation based on the created second communication identifier, the first communication identifier contained in the first authentication message, and the authenticator data held by the receiver-side communication node, and
a device for performing a hash operation on an operation result obtained by the exclusive-OR operation; and
the second authentication message checking device of the receiver-side communication node includes
a device for performing an exclusive-OR operation based on the second communication identifier contained in the second authentication message as well as the first communication identifier and the authenticator data held by the receiver-side communication node,
a device for performing a hash operation on an operation result obtained by the exclusive-OR operation, and
a device for comparing an operation result obtained by the hash operations with the second verification value contained in the second authentication message.

9. The communication node authentication system as claimed in claim 4, wherein:

the first authentication message creating device of the receiver-side communication node includes
a device for creating random numbers as the first communication identifier,
a device for performing an exclusive-OR operation based on the created first communication identifier and the authenticator data held by the receiver-side communication node, and
a device for performing a hash operation on an operation result obtained by the exclusive-OR operation; and
the first authentication message checking device of the transmitter-side communication node includes
a device for performing an exclusive-OR operation based on the first communication identifier contained in the first authentication message and the authenticator data held by the transmitter-side communication node,
a device for performing a hash operation on an operation result obtained by the exclusive-OR operation, and
a device for comparing an operation result obtained by the hash operation with the first verification value contained in the first authentication message.

10. The communication node authentication system as claimed in claim 1, wherein:

the second authentication message creating device of the transmitter-side communication node creates the second authentication message for authenticating the transmitter-side communication node based on a first communication identifier that is unpredictable or unreproducible information, transmitted from the receiver-side communication node, authenticator data held by the transmitter-side communication node, and a second communication identifier; and
the second authentication message checking device of the receiver-side communication node performs authentication of the transmitter-side communication node based on the second authentication message, the second communication identifier that is unpredictable or unreproducible information transmitted from the transmitter-side communication node, the first communication identifier that is unpredictable or unreproducible information transmitted from the receiver-side communication node, and the authenticator data held by the receiver-side communication node.

11. The communication node authentication system as claimed in claim 10, wherein:

the second authentication message creating device of the transmitter-side communication node creates the second authentication message containing a second verification value that is created based on the second communication identifier that is unpredictable or unreproducible information created by the transmitter-side communication node and contained in the connection request message, the authenticator data held by the transmitter-side communication node, and the first communication identifier that is unpredictable or unreproducible information created by the receiver-side communication node and contained in the first authentication message; and

the second authentication message checking device of the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the connection request message, the authenticator data held by the receiver-side communication node, and the first communication identifier created and held by the receiver-side communication node with the second verification value contained in the second authentication message.

12. The communication node authentication system as claimed in claim 10 or claim 11, wherein:

the first authentication message creating device of the receiver-side communication node creates the first authentication message which contains a first verification value created based on the authenticator data held by the receiver-side communication node and the second communication identifier contained in the connection request message, and contains the first communication identifier created and held by the receiver-side communication node;

the first authentication message checking device of the transmitter-side communication node verifies whether or not the first authentication message is an illegitimate first authentication message which is created from same authenticator data as the authenticator data that is held by the transmitter-side communication node, through comparing a result of an operation performed based on the second communication identifier contained in the connection request message, the first communication identifier contained in the first authentication message, and the authenticator data held by the transmitter-side communication node with the first verification value contained in the first authentication message; and

the system further comprises a connection procedure device which starts a mutual connection upon judging that the transmitter-side communication node and the receiver-side communication node keep same authenticator data mutually, only when the first authentication message is verified as being a legitimate message by the first authentication message checking device and the second authentication message is verified as being a legitimate message by the second authentication message checking device.

13. The communication node authentication system as claimed in any one of claims 10, 11, and 12, wherein:

the second authentication message creating device of the transmitter-side communication node includes
a device for performing a connecting operation or an exclusive-OR operation of the second communication identifier contained in the connection request message and the second communication identifier contained in the first authentication message,
a device for performing a hash operation on an operation result obtained by the connecting operation or the exclusive-OR operation,
a device for performing a connecting operation or an exclusive-OR operation of an operation result obtained by the hash operation and the held authenticator data, and
a device for performing a hash operation on an operation result obtained by the connecting operation or the exclusive-OR operation; and
the second authentication message checking device of the receiver-side communication node includes
a device for performing a connecting operation or an exclusive-OR operation of the second communication identifier contained in the connection request message and the first communication identifier held by the receiver-side communication node,
a device for performing a hash operation on an operation result obtained by the connecting operation or the exclusive-OR operation,
a device for performing a connecting operation or an exclusive-OR operation of an operation result obtained by the hash operation and the authenticator data held by the receiver-side communication node,
a device for performing a hash operation on an operation result obtained by the connecting operation or the exclusive-OR operation, and
a device for comparing an operation result obtained by the hash operation with the second verification value contained in the second authentication message.

**14.** The communication node authentication system as claimed in any one of claims 10, 11, and 12, wherein:

the first authentication message creating device of the receiver-side communication node includes a device for performing a connecting operation or an exclusive-OR operation of the second communication identifier contained in the connection request message and the first communication identifier contained in the first authentication message, a device for performing a connecting operation or an exclusive-OR operation of an operation result obtained by the connecting operation or the exclusive-OR operation and the authenticator data held by the receiver-side communication node, and a device for performing a hash operation on an operation result obtained by the connecting operation or the exclusive-OR operation; and the first authentication message checking device of the transmitter-side communication node includes a device for performing a connecting operation or an exclusive-OR operation of the second communication identifier contained in the connection request message and the first communication identifier contained in the first authentication message, a device for performing a connecting operation or an exclusive-OR operation of an operation result of the connecting operation or the exclusive-OR operation and the authenticator data held by the transmitter-side communication node, a device for performing a hash operation on an operation result obtained by the connecting operation or the exclusive-OR operation, and a device for comparing an operation result obtained by the hash operation with the first verification value contained in the first authentication message.

**15.** The communication node authentication system as claimed in any one of claims 10, 11, 12, 13, and 14, wherein, when the first communication identifier and the second communication identifier in the second authentication message creating device, the second authentication message cheeking device, the first authentication message creating device, and the first authentication message checking device are to be connected by the connecting operation, the bit lengths of the first communication identifier and the second communication identifier are reduced under such a condition that the bit length after connecting the first and the second communication identifiers claimed in any one of claims 1 - 9 becomes equal to or more than the bit lengths of the first communication identifier and the second communication identifier.

**16.** The communication node authentication system as claimed in any one of claims 1 - 7 and 10 - 15, including:

a device for storing the first communication identifier or the second communication identifier received from one of the communication nodes as an authentication target in an authentication procedure; and a device for cremating an encryption key that is used for encrypted communication performed after completing the authentication procedure, based on the first communication identifier or the second communication identifier created by the other communication node in the authentication procedure, the authenticator data, and the received identifier.

**17.** A communication node authentication device used for a communication node system which starts communication between communication nodes after performing authentications, the device including:

a first authentication message creating device which creates a first authentication message in response to a connection request message that is transmitted from a communication node to be a transmitter side; and a second authentication message checking device which verifies a second authentication message that is transmitted from the communication node to be the transmitter side.

**18.** A communication node authentication device used for a communication node system which starts communication between communication nodes after performing authentications, the device including:

a first authentication message checking device which verifies the first authentication message that is transmitted from a communication node to be a receiver side; and a second authentication message creating device which creates a second authentication message for authenticating a transmitter-side communication node based on a verification result obtained by the first authentication message checking device.

**19.** A communication node authentication method which starts a communication between communication nodes after performing authentications while having a transmitter-side communication node as one side and a receiver-side communication node as another for communicating with each other, wherein:

the receiver-side communication node executes processing for creating a first authentication message in response to a connection request message transmitted from the transmitter-side communication node;
the transmitter-side communication node executes processing for verifying the first authentication message that is transmitted from the receiver-side communication node, and processing for creating a second authentication message based on a verification result of the first authentication message; and
the receiver-side communication node executes processing for verifying the second authentication message that is transmitted from the transmitter-side communication node.

**20.** The communication node authentication method as claimed in claim 19, wherein:

the transmitter-side communication node creates the second authentication message based on a first communication identifier that is unpredictable or unreproducible information extracted from the first authentication message, authenticator data held by the transmitter-side communication node, and a second communication identifier that is unpredictable or unreproducible information created by the transmitter-side communication node; and
the receiver-side communication node performs authentication of the transmitter-side communication node through verifying the second authentication message based on the second authentication message, the second communication identifier extracted from the second authentication message, the first communication identifier used when creating the first authentication message, and authenticator data held by the receiver-side communication node.

**21.** The communication node authentication method as claimed in claim 19, wherein:

the transmitter-side communication node creates the second authentication message containing a second verification value and a second communication identifier based on a first communication identifier which is unpredictable or unreproducible information created by the receiver-side communication node and is also information contained in the first authentication message for identifying the first authentication message, authenticator data held by the transmitter-side communication node, and a second communication identifier that is unpredictable or unreproducible information created by the transmitter-side communication node; and
the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the second authentication message, the authenticator data held by the authenticator data, and the first communication identifier contained in the first authentication message with the second verification value contained in the second authentication message.

**22.** The communication node authentication method as claimed in claim 19, wherein:

the receiver-side communication node creates the first authentication message which contains a first communication identifier and a first verification value that is created based on authenticator data held by the receiver-side communication node and the first communication identifier created by the receiver-side communication node; and
the transmitter-side communication node verifies whether or not the first authentication message is an illegitimate first authentication message which is created from same authenticator data as the authenticator data that is held by the transmitter-side communication node, through comparing a result of an arithmetic operation performed based on the first communication identifier contained in the first authentication message and the authenticator data held by the transmitter-side communication node with the first verification value contained in the first authentication message.

**23.** The communication node authentication method as claimed in claim 19, which starts a mutual connection upon judging that the transmitter-side communication node and the receiver-side communication node keep same authenticator data mutually, only when the first authentication message is verified as being a legitimate message and the second authentication message is verified as being a legitimate message.

24. The communication node authentication method as claimed in claim 20 or claim 21, wherein:

the transmitter-side communication node creates random numbers as the second communication identifier, performs a connecting operation based on the created second communication identifier, the first communication identifiers contained in the first authentication message, and the authenticator data held by the transmitter-side communication node, and performs a hash operation on an operation result obtained by the connecting operation; and
the receiver-side communication node performs a connecting operation based on the second communication identifier contained in the second authentication message, the first communication identifier contained held by the receiver-side communication node, and the authenticator data held by the receiver-side communication node, performs a hash operation on an operation result obtained by the connecting operation, and compares an operation result obtained by the hash operation with the second verification value contained in the second authentication message.

25. The communication node authentication method as claimed in claim 22, wherein:

the receiver-side communication node creates random numbers as the first communication identifier, performs a connecting operation based on the created first communication identifier and the authenticator data held by the receiver-side communication node, and performs a hash operation on an operation result obtained by the connecting operation; and
the transmitter-side communication node performs a connecting operation based on the first communication identifier contained in the first authentication message and the authenticator data held by the transmitter-side communication node, performs a hash operation on an operation result obtained by the connecting operation, and compares an operation result obtained by the hash operation with the first verification value contained in the first authentication message.

26. The communication node authentication method as claimed in claim 20 or claim 21, wherein:

the transmitter-side communication node creates random numbers as the second communication identifier, performs an exclusive-OR operation based on the created second communication identifier, the first communication identifier contained in the first authentication message, and the authenticator data held by the receiver-side communication node, and performs a hash operation on an operation result obtained by the exclusive-OR operation; and
the receiver-side communication node performs an exclusive-OR operation based on the second communication identifier contained in the second authentication message as well as the first communication identifier and the authenticator data held by the receiver-side communication node, performs a hash operation on an operation result obtained by the exclusive-OR operation, and compares an operation result obtained by the hash operation with the second verification value contained in the second authentication message.

27. The communication node authentication method as claimed in claim 22, wherein:

the receiver-side communication node creates random numbers as the first communication identifier, performs an exclusive-OR operation based on the created first communication identifier and the authenticator data held by the receiver-side communication node, and performs a hash operation on an operation result obtained by the exclusive-OR operation; and
the transmitter-side communication node performs an exclusive-OR operation based on the first communication identifier contained in the first authentication message and the authenticator data held by the transmitter-side communication node, performs a hash operation on an operation result obtained by the exclusive-OR operation, and compares an operation result obtained by the hash operation with the first verification value contained in the first authentication message.

28. The communication node authentication method as claimed in claim 19, wherein:

the transmitter-side communication node creates the second authentication message for authenticating the transmitter-side communication node based on a first communication identifier that is unpredictable or unreproducible information transmitted from the receiver-side communication node, authenticator data held by the transmitter-side communication node, and a second communication identifier; and
the receiver-side communication node performs authentication of the transmitter-side communication node based on the second authentication message, the second communication identifier that is unpredictable or unreproducible information transmitted from the transmitter-side communication node, the first communication identifier that is unpredictable or unreproducible information transmitted from the receiver-side communication node, and the authenticator data held by the receiver-side communication node.

**29.** The communication node authentication method as claimed in claim 28, wherein:

the transmitter-side communication node creates the second authentication message containing a second versification value that is created based on the second communication identifier that is unpredictable or unreproducible information created by the transmitter-side communication node and contained in the connection request message, authenticator data held by the transmitter-side communication node, and the first communication identifier that is unpredictable or unreproducible information created by the receiver-side communication node and contained in the first authentication message; and
the receiver-side communication node verifies whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the connection request message, the authenticator data held by the receiver-side communication node, and the first communication identifier created and held by the receiver-side communication node with the second verification value contained in the second authentication message.

**30.** The communication node authentication method as claimed in claim 28 or claim 29, wherein:

the receiver-side communication node creates the first authentication message which contains the first verification value created based on the authenticator data held by the receiver-side communication node and the second communication identifier contained in the connection request message, and contains the first communication identifier created and held by the receiver-side communication node;
the transmitter-side communication node verifies whether or not the first authentication message is an illegitimate first authentication message which is created from same authenticator data as the authenticator data that is held by the transmitter-side communication node, through comparing a result of an arithmetic operation performed based on the second communication identifier contained in the connection request message, the first communication identifier contained in the first authentication message, and the authenticator data held by the transmitter-side communication node with the first verification value contained in the first authentication message; and
a mutual connection is started upon judging that the transmitter-side communication node and the receiver-side communication node keep same authenticator data mutually, only when the first authentication message is verified as being a legitimate message and the second authentication message is verified as being a legitimate message by the first authentication message checking device.

**31.** The communication node authentication method as claimed in any one of claims 28, 29, and 30, wherein:

the transmitter-side communication node performs a connecting operation or an exclusive-OR operation of the second communication identifier contained in the connection request message and the second communication identifier contained in the first authentication message, performs a hash operation on an operation result obtained by the connecting operation or the exclusive-OR operation, performs a connecting operation or an exclusive-OR operation of an operation result obtained by the hash operation and the held authenticator data, and performs a hash operation on an operation result obtained by the connecting operation or the exclusive-OR operation; and
the receiver-side communication node performs a connecting operation or an exclusive-OR operation of the second communication identifier contained in the connection request message and the first communication identifier held by the receiver-side communication node, performs a hash operation on an operation result obtained by the connecting operation or the exclusive-OR operation, performs a connecting operation or an exclusive-OR operation of an operation result obtained by the hash operation and the authenticator data held by the receiver-side communication node, performs a hash operation on an operation result obtained by the connecting operation or the exclusive-OR operation, and compares an operation result obtained by the hash operation with the second verification value contained in the second authentication message.

**32.** The communication node authentication method as claimed in any one of claims 28, 29, and 30, wherein:

the receiver-side communication node performs a connecting operation or an exclusive-OR operations of the second communication identifier contained in the connection request message and the first communication identifier contained in the first authentication message, performs a connecting operation or an exclusive-OR operation of an operation result obtained by the connecting operation or the exclusive-OR operation and the authenticator data held by the receiver-side communication node, and performs a hash operation on an operation result obtained by the connecting operation or the exclusive-OR operation; and

the transmitter-side communication node performs a connecting operation or an exclusive-OR operation of the second communication identifier contained in the connection request message and the first communication identifier contained in the first authentication message, performs a connecting operation or an exclusive-OR operation of an operation result obtained by the connecting operation or the exclusive-OR operation and the authenticator data held by the transmitter-side communication node, performs a hash operation on an operation result obtained by the connecting operation or the exclusive-OR operation, and compares an operation result obtained by the hash operation with the first verification value contained in the first authentication message.

33. The communication node authentication method as claimed in any one of claims 28, 29, 30, 31, and 32, wherein, when the first communication identifier and the second communication identifier in creating processing of the second authentication message, checking processing of the second authentication message, creating processing of the first authentication message, and checking processing of the first authentication message are to be connected by the connecting operation, the bit length of connected data string is reduced under such a condition that the bit length becomes equal to or more than the bit length of the first communication identifier or the second communication identifier before being connected.

34. The communication node authentication system as claimed in any one of claims 19 - 25 and 28 - 33, which:

stores the first communication identifier or the second communication identifier received from one of the communication nodes as an authentication target in an authentication procedure; and

creates an encryption key that is used for encrypted communication performed after completing the authentication procedure, based on the first communication identifier or the second communication identifier created by the other communication node in the authentication procedure, the authenticator data, and the received identifier.

35. A communication node authentication program for starting a communication between communication nodes after performing authentications while having a transmitter-side communication node as one side and a receiver-side communication node as another for communicating with each other, the program allowing:

a computer that configures the receiver-side communication node to execute

a function of creating a first authentication message in response to a connection request message transmitted from the transmitter-side communication node, and

a function of verifying a second authentication message that is transmitted from the transmitter-side communication node; and

a computer that configures the transmitter-side communication node to execute

a function of verifying the first authentication message that is transmitted from the receiver-side communication node, and

a function of creating the second authentication message based on a verification result of the first authentication message.

36. The communication node authentication program as claimed in claim 35, which allows:

the computer that configures the transmitter-side communication node to execute a function of creating the second authentication message based on a first communication identifier that is unpredictable or unreproducible information extracted from the first authentication message, authenticator data held by the transmitter-side communication node, and a second communication identifier that is unpredictable or unreproducible information created by the transmitter-side communication node; and

the computer that configures the receiver-side communication node to execute a function of performing authentication of the transmitter-side communication node through verifying the second authentication message based on the second authentication message, the second communication identifier extracted from the second authentication message, the first communication identifier used when creating the first authentication message, and authenticator data held by the receiver-side communication node.

**37.** The communication node authentication program as claimed in claim 35, which allows:

the computer that configures the transmitter-side communication node to execute a function of creating the second authentication message containing a second verification value and a second communication identifier based on a first communication identifier which is unpredictable or unreproducible information created by the receiver-side communication node and is also information contained in the first authentication message for identifying the first authentication message, authenticator data held by the transmitter-side communication node, and a second communication identifier that is unpredictable or unreproducible information created by the transmitter-side communication node; and

the computer that configures the receiver-side communication node to execute a function of verifying whether or not the second authentication message is an illegitimate second authentication message which is created by corresponding to the first authentication message and created from same authenticator data as the authenticator data that is held by the receiver-side communication node, through comparing a result of an arithmetic operation performed based on the second communication identifier contained in the second authentication message, the authenticator data held by the receiver-side communication node, and the first communication identifier contained in the first authentication message with the second verification value contained in the second authentication message.

**38.** The communication node authentication program as claimed in claim 35, which allows:

the computer that configures the receiver-side communication node to execute a function of creating the first authentication message which contains a first communication identifier and a first verification value that is created based on authenticator data held by the receiver-side communication node and the first communication identifier created by the receiver-side communication node; and

the computer that configures the transmitter-side communication node to execute a function of verifying whether or not the first authentication message is an illegitimate first authentication message which is created from same authenticator data as the authenticator data that is held by the transmitter-side communication node, through comparing a result of an arithmetic operation performed based on the first communication identifier contained in the first authentication message and the authenticator data held by the transmitter-side communication node with the first verification value contained in the first authentication message.

**39.** The communication node authentication program as claimed in claim 35, which allows the respective computers that configure the receiver-side communication node and the transmitter-side communication node to execute a function of starting a mutual connection upon judging that the transmitter-side communication node and the receiver-side communication node keep same authenticator data mutually, only when the first authentication message is verified as being a legitimate message and the second authentication message is verified as being a legitimate message.

**40.** The communication node authentication program as claimed in claim 38 or claim 39, which allows:

the computer that configures the transmitter-side communication node to execute
a function of creating random numbers as the second communication identifier,
a function of performing a connecting operation based on the created second communication identifier, the first communication identifier contained in the first authentication message, and the authenticator data held by the transmitter-side communication node, and
a function of performing a hash operation on an operation result obtained by the connecting operation; and
the computer that configures the receiver-side communication node to execute
a function of performing a connecting operation based on the second communication identifier contained in the second authentication message, the first communication identifier held by the receiver-side communication node, and the authenticator data held by the receiver-side communication node,
a function of performing a hash operation on an operation result obtained by the connecting operation, and
a function of comparing an operation result obtained by the hash operation with the second verification value contained in the second authentication message.

**41.** The communication node authentication program as claimed in claim 40, which allows:

the computer that configures the receiver-side communication node to execute
a function of creating random numbers as the first communication identifier,

a function of performing a connecting operation based on the created first communication identifier and the authenticator data held by the receiver-side communication node, and

a function of performing a hash operation on an operation result obtained by the connecting operation; and the computer that configures the transmitter-side communication node to execute

a function of performing a connecting operation based on the first communication identifier contained in the first authentication message and the authenticator data held by the transmitter-side communication node,

a function of performing a hash operation on an operation result obtained by the connecting operation, and

a function of comparing an operation result obtained by the hash operation with the first verification value contained in the first authentication message.

**42.** The communication node authentication program as claimed in claim 38 or claim 39, which allows:

the computer that configures the transmitter-side communication node to execute

a function of creating random numbers as the second communication identifier,

a function of performing an exclusive-OR operation based on the created second communication identifier, the first communication identifier contained in the first authentication message, and the authenticator data held by the receiver-side communication node, and

a function of performing a hash operation on an operation result obtained by the exclusive-OR operation; and the computer that configures the receiver-side communication node to execute

a function of performing an exclusive-OR operation based on the second communication identifier contained in the second authentication message as well as the first communication identifier and the authenticator data held by the receiver-side communication node,

a function of performing a hash operation on an operation result obtained by the exclusive-OR operation, and

a function of comparing an operation result obtained by the hash operation with the second verification value contained in the second authentication message.

**43.** The communication node authentication program as claimed in claim 40, which allows:

the computer that configures the receiver-side communication node to execute

a function of creating random numbers as the first communication identifier,

a function of performing an exclusive-OR operation based on the created first communication identifier and the authenticator data held by the receiver-side communication node, and

a function of performing a hash operation on an operation result obtained by the exclusive-OR operation; and the computer that configures the transmitter-side communication node to execute

a function of performing an exclusive-OR operation based on the first communication identifier contained in the first authentication message and the authenticator data held by the transmitter-side communication node,

a function of performing a hash operation on an operation result obtained by the exclusive-OR operation, and

a function of comparing an operation result obtained by the hash operation with the first verification value contained in the first authentication message.

**44.** The communication node authentication program as claimed in claim 37, which allows:

the computer that configures the transmitter-side communication node to execute a function of creating the second authentication message for authenticating the transmitter-side communication node based on the first communication identifier that is unpredictable or unreproducible information transmitted from the receiver-side communication node, the authenticator data held by the transmitter-side communication node, and the second communication identifier; and

the computer that configures the receiver-side communication node to execute a function of performing authentication of the transmitter-side communication node based on the second authentication message, the second communication identifier that is unpredictable or unreproducible information transmitted from the transmitter-side communication node, the first communication identifier that is unpredictable or unreproducible information transmitted from the receiver-side communication node, and the authenticator data held by the receiver-side communication node.

**45.** The communication node authentication program as claimed in claim 44, which allows:

the computer that configures the transmitter-side communication node to execute a function of creating the second authentication message containing a second verification value that is created based on the second communication identifier that is unpredictable or unreproducible information created by the transmitter-side communication node and contained in the connection request message, the authenticator data held by the transmitter-side communication node, and the first communication identifier that is unpredictable or unreproducible information created by the receiver-side communication node and contained in the first authentication message; and

the computer that configures the receiver-side communication node to execute a function of verifying whether or not the second authentication message is as illegitimate second authentication message which is created by corresponding to the first authentication message and created from same authenticator data as the authenticator data that is held by the receiver-side communication node, through comparing a result of an arithmetic operation performed based on the second communication identifier contained in the connection request message, the authenticator data held by the receiver-side communication node, and the first communication identifier created and held by the receiver-side communication node with the second verification value contained in the second authentication message.

46. The communication node authentication program as claimed in claim 44 or claim 45, which allows:

the computer that configures the receiver-side communication node to execute a function of creating the first authentication message which contains a first verification value created based on the authenticator data held by the receiver-side communication node and the second communication identifier contained in the connection request message, and the first communication identifier created and held by the receiver-side communication node;

the computer that configures the transmitter-side communication node to execute a function of verifying whether or not the first authentication message is an illegitimate first authentication message which is created from same authenticator data as the authenticator data that is held by the transmitter-side communication node, through comparing a result of an arithmetic operation performed based on the second communication identifier contained in the connection request message, the first communication identifier contained in the first authentication message, and the authenticator data held by the transmitter-side communication node with the firs verification value contained in the first authentication message; and

the respective computers that configure the receiver-side communication node and the transmitter-side communication node to execute a function of starting a mutual connection upon judging that the transmitter-side communication node and the receiver-side communication node keep same authenticator data mutually, only when the first authentication message is verified as being a legitimate message and the second authentication message is verified as being a legitimate message.

47. The communication node authentication program as claimed in claim 46, which allows:

the computer that configures the transmitter-side communication node to execute
a function of performing a connecting operation or an exclusive-OR operation of the second communication identifier contained in the convection request message and the second communication identifier contained in the first authentication message,
a function of performing a hash operation on an operation result obtained by the connecting operation or the exclusive-OR operation,
a function of performing a connecting operation or an exclusive-OR operation of an operation result obtained by the hash operation and the held authenticator data, and
a function of performing a hash operation on an operation result obtained by the connecting operation or the exclusive-OR operation; and
the computer that configures the receiver-side communication node to execute
a function of performing a connecting operation or an exclusive-OR operation of the second communication identifier contained in the connection request message and the first communication identifier held by the receiver-side communication node,
a function of performing a hash operation on an operation result obtained by the connecting operation or the exclusive-OR operation,
a function of performing a connecting operation or an exclusive-OR operation of an operation result obtained by the hash operation and the authenticator data held by the receiver-side communication node,
a function of performing a hash operation on an operation result obtained by the connecting operation or the exclusive-OR operation, and
a function of comparing an operation result obtained by the hash operation with the second verification value contained in the second authentication message.

**48.** The communication node authentication program as claimed in claim 46 or claim 47, which allows:

the computer that configures the receiver-side communication node to execute
a function of performing a connecting operation or an exclusive-OR operation of the second communication identifier contained in the connection request message and the first communication identifier contained in the first authentication message,
a function of performing a connecting operation or an exclusive-OR operation of an operation result obtained by the connecting operation or the exclusive-OR operation and the authenticator data held by the receiver-side communication node, and
a function of performing a hash operation on an operation result obtained by the connecting operation or the exclusive-OR operation; and
the computer that configures the transmitter-side communication node to execute
a function of performing a connecting operation or an exclusive-OR operation of the second communication identifier contained in the connection request message and the first communication identifier contained in the first authentication message,
a function of performing a connecting operation or an exclusive-OR operation of a result of an arithmetic operation of the connecting operation or the exclusive-OR operation and the authenticator data held by the receiver-side communication node,
a. function of performing a hash operation on an operation result obtained by the connecting operation or the exclusive-OR operation, and
a function of comparing an operation result obtained by the hash operation with the first verification value contained in the first authentication message.

**49.** The communication node authentication program as claimed in any one of claims 46, 47, and 48, wherein, when the first communication identifier and the second communication identifier in creation of the second authentication message, verification of the second authentication message, creation of the first authentication message, and verification of the first authentication message are to be connected by the connecting operation, the bit length of connected data string is reduced under such a condition that the bit length becomes equal to or more than the bit length of the first communication identifier or the second communication identifier before being connected.

**50.** The communication node authentication program as claimed in any one of claims 37-43 and 46 - 49, which allows the computer to:

store the first communication identifier or the second communication identifier received from one of the communication nodes as an authentication target in an authentication procedure; and
execute a function of creating an encryption key that is used for encrypted communication performed after completing the authentication procedure, based on the first communication identifier or the second communication identifier created by the other communication node in the authentication procedure, the authenticator data, and the received identifier.

**51.** A communication node authentication program for allowing a computer, which configures a communication node authentication device used for a communication node authentication system which starts a communication between communication nodes after performing authentications, to execute:

a function of creating a first authentication message in response to a connection request message that is transmitted from a communication node to be a transmitter side; and
a function of verifying a second authentication message that is transmitted from the communication node to be the transmitter side.

**52.** A communication node authentication program for allowing a computer, which configures a communication node authentication device used for a communication node authentication system which starts a communication between communication nodes after performing authentications, to execute:

a function of verifying the first authentication message that is transmitted from a communication node to be a receiver side; and
a function of creating a second authentication message for authenticating the transmitter-side communication node based on a verification result obtained by the first authentication message checking device.

# FIG. 1

CONNECTING INSTRUCTION

MESSAGE COMMUNICATION DEVICE

FIRST AUTHENTICATION MESSAGE CREATING SECTION — 102

AUTHENTICATOR DATA STORAGE SECTION — 108

CONNECTION REQUEST MESSAGE CREATING SECTION — 101

COMPUTER

CONNECTION COMPUTER — 1091

HASH COMPUTER — 1092

COMPARATOR — 1093

RANDOM NUMBER CREATING SECTION — 1094

103

FIRST AUTHENTICATION MESSAGE CHECKING SECTION

SECOND AUTHENTICATION MESSAGE CHECKING SECTION — 105

SECOND AUTHENTICATION MESSAGE CREATING SECTION — 104

109

CONNECTION PERMISSION MESSAGE CREATING SECTION — 106

COMMUNICATION IDENTIFIER STORAGE SECTION — 110

CONNECTION PROCEDURE SECTION — 107

MESSAGE COMMUNICATION DEVICE

20

10

20

CONNECTION

EP 2 023 530 A1

48

# FIG. 2

TRANSMITTER-SIDE
COMMUNICATION NODE

RECEIVER-SIDE
COMMUNICATION NODE

101

CONNECTION
REQUEST MESSAGE
CREATING SECTION

102

FIRST AUTHENTICATION
MESSAGE CREATING
SECTION

103

FIRST
AUTHENTICATION
MESSAGE CHECKING
SECTION

FIRST AUTHENTICATION
MESSAGE

104

SECOND
AUTHENTICATION
MESSAGE CREATING
SECTION

SECOND
AUTHENTICATION
MESSAGE CHECKING
SECTION

105

SECOND AUTHENTICATION
MESSAGE

106

CONNECTION
PROCEDURE
SECTION

CONNECTION
PERMISSION MESSAGE
CREATING SECTION

107

107

CONNECTION
PROCEDURE
SECTION

49

# FIG. 3

TRANSMITTER-SIDE COMMUNICATION NODE

RECEIVER-SIDE COMMUNICATION NODE

CONNECTING INSTRUCTION

108A — AUTHENTICATOR DATA STORAGE SECTION

101A — CONNECTION REQUEST MESSAGE CREATING SECTION

(CONNECTION REQUEST MESSAGE)

102B — FIRST AUTHENTICATION MESSAGE CREATING SECTION

108B — AUTHENTICATOR DATA STORAGE SECTION

COMPUTER — 1091

CONNECTION COMPUTER

1092 — HASH COMPUTER

1093 — COMPARATOR

RANDOM NUMBER CREATING SECTION

109A    1094

103A — FIRST AUTHENTICATION MESSAGE CHECKING SECTION

(FIRST AUTHENTICATION MESSAGE)

104A — SECOND AUTHENTICATION MESSAGE CREATING SECTION

(SECOND AUTHENTICATION MESSAGE)

COMPUTER — 1091

CONNECTION COMPUTER

1092 — HASH COMPUTER

1093 — COMPARATOR

1094 — RANDOM NUMBER CREATING SECTION

109B

105B — SECOND AUTHENTICATION MESSAGE CHECKING SECTION

107A — CONNECTION PROCEDURE SECTION

(CONNECTION PERMISSION MESSAGE)

106B — CONNECTION PERMISSION MESSAGE CREATING SECTION

110B — COMMUNICATION IDENTIFIER STORAGE SECTION

107B — CONNECTION PROCEDURE SECTION

COMMUNICATION NODE AUTHENTICATION DEVICE 10A

COMMUNICATION NODE AUTHENTICATION DEVICE 10B

CONNECTION

EP 2 023 530 A1

# FIG. 4

10A

TRANSMITTER-SIDE
COMMUNICATION NODE

( START )

| CREATE CONNECTION REQUEST MESSAGE | ~S510 |
| TRANSMIT CONNECTION REQUEST MESSAGE | ~S511 |
| STANDBY FOR RECEIVING MESSAGE | ~S512 |
| RECEIVE FIRST AUTHENTICATION MESSAGE | ~S513 |
| VERIFY FIRST AUTHENTICATION MESSAGE | ~S514 |
| CREATE SECOND AUTHENTICATION MESSAGE | ~S515 |
| TRANSMIT SECOND AUTHENTICATION MESSAGE | ~S516 |
| STANDBY FOR RECEIVING MESSAGE | ~S517 |
| RECEIVE CONNECTION PERMISSION MESSAGE | ~S518 |
| CONNECTING PROCEDURE | ~S519 |

( END )

10B

RECEIVER-SIDE
COMMUNICATION NODE

( START )

| S520 | STANDBY FOR RECEIVING MESSAGE |
| S521 | RECEIVE CONNECTION REQUEST MESSAGE |
| S522 | CREATE FIRST AUTHENTICATION MESSAGE |
| S523 | TRANSMIT FIRST AUTHENTICATION MESSAGE |
| S524 | STANDBY FOR RECEIVING MESSAGE |
| S525 | RECEIVE SECOND AUTHENTICATION MESSAGE |
| S526 | VERIFY SECOND AUTHENTICATION MESSAGE |
| S527 | CREATE CONNECTION PERMISSION MESSAGE |
| S528 | TRANSMIT CONNECTION PERMISSION MESSAGE |
| S529 | CONNECTING PROCEDURE |

( END )

# FIG. 5

```
                    ┌─────────────┐
                    │    START    │
                    └─────────────┘
                           │
         ┌─────────────────────────────────┐
         │  CREATE RANDOM NUMBER RB         │──── S610
         └─────────────────────────────────┘
                           │
         ┌─────────────────────────────────┐
         │  STORE RANDOM NUMBER RB          │──── S611
         └─────────────────────────────────┘
                           │
         ┌─────────────────────────────────┐
         │ OBTAIN AUTHENTICATOR DATA GB     │──── S612
         └─────────────────────────────────┘
                           │
         ┌─────────────────────────────────┐
         │      CONNECTED VALUE             │──── S613
         │  UC1 = RB‖GB OPERATION           │
         └─────────────────────────────────┘
                           │
         ┌─────────────────────────────────┐
         │  HASH HC1 = HASH (UC1)           │──── S614
         │      OPERATION                   │
         └─────────────────────────────────┘
                           │
         ┌─────────────────────────────────┐
         │      CONNECTED VALUE             │──── S615
         │  MSG1 = RB‖HC1 OPERATION         │
         └─────────────────────────────────┘
                           │
                    ┌─────────────┐
                    │     END     │
                    └─────────────┘
```

# FIG. 6

START

EXTRACT RB — S710

EXTRACT HC1 — S711

OBTAIN AUTHENTICATOR DATA GA — S712

CONNECTED VALUE
UV1 = RB‖GA OPERATION — S713

HASH HV1=HASH(UV1) OPERATION — S714

S715

HC1 = HV1 ?

NO

YES

INTERRUPTED

END

# FIG. 7

START

CREATE RANDOM NUMBER RA — S810

EXTRACT RB — S811

OBTAIN AUTHENTICATOR DATA GA — S812

CONNECTED VALUE UC2=RA∥RB∥GA OPERATION — S813

HASH HC2=HASH(UC2) OPERATION — S814

CONNECTED VALUE MSG2=RA∥HC2 OPERATION — S815

END

# FIG. 8

```
                    ┌─────────────┐
                    │    START    │
                    └──────┬──────┘
                           │
           ┌───────────────────────────────┐
           │         EXTRACT RA            │──── S910
           └───────────────┬───────────────┘
                           │
           ┌───────────────────────────────┐
           │        EXTRACT HC2           │──── S911
           └───────────────┬───────────────┘
                           │
           ┌───────────────────────────────┐
           │ OBTAIN AUTHENTICATOR DATA GB │──── S912
           └───────────────┬───────────────┘
                           │
           ┌───────────────────────────────┐
           │         OBTAIN RB            │──── S913
           └───────────────┬───────────────┘
                           │
  ┌──────────────────────────────────────────────┐
  │ CONNECTED VALUE UV2＝RA‖RB‖GA OPERATION │──── S914
  └────────────────────┬─────────────────────────┘
                       │
     ┌──────────────────────────────────────────┐
     │  HASH HV2＝HASH(UV2) OPERATION         │──── S915
     └────────────────────┬─────────────────────┘
                          │
                      S916 │
                  ◇─────────────────◇     NO
                 ╱                   ╲──────────┐
                ◇    HC2 = HV2 ?     ◇          │
                 ╲                   ╱      ┌─────────────┐
                  ◇─────────────────◇      │ INTERRUPTED │
                       │ YES               └─────────────┘
                  ┌─────────┐
                  │   END   │
                  └─────────┘
```

# FIG. 9

COMPUTER ⌐109

EXCLUSIVE-OR COMPUTER ⌐1095

CONNECTION COMPUTER ⌐1091

COMPARATOR ⌐1092

HASH COMPUTER ⌐1093

RANDOM NUMBER CREATING SECTION ⌐1094

# FIG. 10

1101

ILLEGITIMATE CONNECTION PREPARING STATE

TRANSMITTER-SIDE COMMUNICATION NODE GA → RECEIVER-SIDE COMMUNICATION NODE GB

VALUES TAPPED IN COMMUNICATION

$D1 = RB$
$D2 = HASH(RB(x)GB)$

} CONTAINED IN FIRST AUTHENTICATION MESSAGE

$D3 = RA$
$D4 = HASH(RA(x)RB(x)GA)$

} CONTAINED IN SECOND AUTHENTICATION MESSAGE

COMMUNICATION NODE X

1102

ILLEGITIMATE CONNECTION TRYING STATE

TRANSMITTER-SIDE COMMUNICATION NODE → RECEIVER-SIDE COMMUNICATION NODE GB

FIRST AUTHENTICATION MESSAGE: $RBs \| HASH(RBs(x)GB)$

$RX = D3(x)D1(x)RBs$

SECOND AUTHENTICATION MESSAGE: $RX \| D4$

# FIG. 11

TRANSMITTER-SIDE COMMUNICATION NODE

START

CREATE CONNECTION REQUEST MESSAGE — S1410

TRANSMIT CONNECTION REQUEST MESSAGE — S1411

STANDBY FOR RECEIVING MESSAGE — S1412

RECEIVE FIRST AUTHENTICATION MESSAGE — S1413

VERIFY FIRST AUTHENTICATION MESSAGE — S1414

CREATE SECOND AUTHENTICATION MESSAGE — S1415

TRANSMIT SECOND AUTHENTICATION MESSAGE — S1416

STANDBY FOR RECEIVING MESSAGE — S1417

RECEIVE CONNECTION PERMISSION MESSAGE — S1418

CONNECTING PROCEDURE — S1419

END

RECEIVER-SIDE COMMUNICATION NODE

START

S1420 — STANDBY FOR RECEIVING MESSAGE

S1421 — RECEIVE CONNECTION REQUEST MESSAGE

S1422 — CREATE FIRST AUTHENTICATION MESSAGE

S1423 — TRANSMIT FIRST AUTHENTICATION MESSAGE

S1424 — STANDBY FOR RECEIVING MESSAGE

S1425 — RECEIVE SECOND AUTHENTICATION MESSAGE

S1426 — VERIFY SECOND AUTHENTICATION MESSAGE

S1427 — CREATE CONNECTION PERMISSION MESSAGE

S1428 — TRANSMIT CONNECTION PERMISSION MESSAGE

S1429 — CONNECTING PROCEDURE

END

58

# FIG. 12

```
         ┌─────────────┐
         │    START    │
         └─────────────┘
                │
    ┌───────────────────────────┐
    │    CREATE CONNECTION       │──── S1510
    │    REQUEST MESSAGE         │
    └───────────────────────────┘
                │
    ┌───────────────────────────┐
    │  CREATE RANDOM NUMBER RA   │──── S1511
    └───────────────────────────┘
                │
         ┌─────────────┐
         │     END     │
         └─────────────┘
```

# FIG. 13

START

CONNECT RA‖CONNECTION REQUEST MESSAGE — S1611

TRANSMIT RA‖TRANSMIT CONNECTION REQUEST MESSAGE — S1612

END

# FIG. 14

START

CREATE RANDOM NUMBER RB — S1710

STORE RANDOM NUMBER RB — S1711

OBTAIN AUTHENTICATOR DATA GB — S1712

EXTRACT RA — S1713

CONNECTED VALUE UC1＝RA‖RB‖GB OPERATION — S1714

HASH HC1＝HASH(UC1) OPERATION — S1715

CONNECTED VALUE MSG1＝RB‖HC1 OPERATION — S1716

END

# FIG. 15

START

EXTRACT RB — S1810

EXTRACT HC1 — S1811

OBTAIN AUTHENTICATOR DATA GA — S1812

CONNECTED VALUE UV1=RA∥RB∥GB OPERATION — S1813

HASH HC1=HASH(UV1) OPERATION — S1814

S1815

HC1 = HV1 ?  — NO → INTERRUPTED

YES

END

# FIG. 16

```
                        ┌──────────────┐
                        │    START     │
                        └──────────────┘
                               │
            ┌──────────────────────────────────────┐
            │            EXTRACT RB                 │──── S1910
            └──────────────────────────────────────┘
                               │
         ┌────────────────────────────────────────────┐
         │     OBTAIN AUTHENTICATOR DATA GA            │──── S1911
         └────────────────────────────────────────────┘
                               │
   ┌─────────────────────────────────────────────────────────┐
   │ CONNECTED VALUE UC2=HASH(RA‖RB)‖GA OPERATION             │──── S1912
   └─────────────────────────────────────────────────────────┘
                               │
       ┌──────────────────────────────────────────────┐
       │    HASH HC2=HASH(UC2) OPERATION               │──── S1913
       └──────────────────────────────────────────────┘
                               │
                        ┌──────────────┐
                        │     END      │
                        └──────────────┘
```

# FIG. 17

```
                    ┌─────────────┐
                    │    START    │
                    └──────┬──────┘
            ┌──────────────┴──────────────┐
            │         EXTRACT RA          │─── S2010
            └──────────────┬──────────────┘
            ┌──────────────┴──────────────┐
            │         OBTAIN HC2          │─── S2011
            └──────────────┬──────────────┘
       ┌───────────────────┴───────────────────┐
       │   OBTAIN AUTHENTICATOR DATA GB         │─── S2012
       └───────────────────┬───────────────────┘
            ┌──────────────┴──────────────┐
            │         OBTAIN RB           │─── S2013
            └──────────────┬──────────────┘
 ┌─────────────────────────┴─────────────────────────┐
 │ CONNECTED VALUE UV2=HASH(RA‖RB)‖GB OPERATION       │─── S2014
 └─────────────────────────┬─────────────────────────┘
     ┌─────────────────────┴─────────────────────┐
     │    HASH HC2=HASH(UV2) OPERATION            │─── S2015
     └─────────────────────┬─────────────────────┘
                                        S2016
                    ◇─────────────────◇
                    │   HC2 = HV2 ?   │─── NO ───┐
                    ◇─────────────────◇          │
                           │ YES         ┌───────┴────────┐
                           │             │  INTERRUPTED   │
                    ┌──────┴──────┐      └────────────────┘
                    │     END     │
                    └─────────────┘
```

# FIG. 18

FIRST AND SECOND
EXEMPLARY
EMBODIMENTS

2101

FIRST
COMMUNICATION
IDENTIFIER

TRANSMITTER-SIDE
COMMUNICATION
NODE

128bit

128bit

RECEIVER-SIDE
COMMUNICATION
NODE

SECOND
COMMUNICATION
IDENTIFIER

THIRD EXEMPLARY
EMBODIMENT

2111

SECOND
COMMUNICATION
IDENTIFIER

FIRST
COMMUNICATION
IDENTIFIER

64bit

TRANSMITTER-SIDE
COMMUNICATION
NODE

64bit

RECEIVER-SIDE
COMMUNICATION
NODE

# FIG. 19

CONNECTING INSTRUCTION

MESSAGE COMMUNICATION DEVICE

FIRST AUTHENTICATION MESSAGE CREATING SECTION — 102

AUTHENTICATOR DATA STORAGE SECTION — 108

COMPUTER — 109

CONNECTION REQUEST MESSAGE CREATING SECTION — 103

101

FIRST AUTHENTICATION MESSAGE CHECKING SECTION

SECOND AUTHENTICATION MESSAGE CHECKING SECTION — 105

104

SECOND AUTHENTICATION MESSAGE CREATING SECTION

106

CONNECTION PERMISSION MESSAGE CREATING SECTION

110

COMMUNICATION IDENTIFIER STORAGE SECTION

RECEIVED COMMUNICATION IDENTIFIER STORAGE SECTION — 111

107

CONNECTION PROCEDURE SECTION

COMMON VALUE CREATING SECTION — 112

COMMUNICATION NODE AUTHENTICATION DEVICE

20

10

COMMON VALUE

CONNECTION 20

MESSAGE COMMUNICATION DEVICE

EP 2 023 530 A1

66

# FIG. 20

HOME SERVER

PORTABLE
TERMINAL

S500

SHARE INFORMATION
REGARDING DEVICE

CREATE AUTHENTICATION KEY
FOR DEVICE

CREATE AUTHENTICATION KEY

S506

TRANSMIT AUTHENTICATION
REQUEST MESSAGE

CREATE AUTHENTICATION KEY
FOR DEVICE

S508

CREATE AUTHENTICATION VALUE

S510

TRANSMIT AUTHENTICATION
MESSAGE

S512

COMPARE AUTHENTICATION
VALUE

S514

TRANSMIT AUTHENTICATION
RESULT MESSAGE

S515

## INTERNATIONAL SEARCH REPORT

| | International application No. |
|---|---|
| | PCT/JP2007/060140 |

**A. CLASSIFICATION OF SUBJECT MATTER**
*H04L9/32*(2006.01)i, *G09C1/00*(2006.01)i

According to International Patent Classification (IPC) or to both national classification and IPC

**B. FIELDS SEARCHED**

Minimum documentation searched (classification system followed by classification symbols)
H04L9/32, G09C1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br><br>Y | JP 2003-44436 A (Sony Corp.),<br>14 December, 2003 (14.12.03),<br>Par. Nos. [0041] to [0045]; Fig. 4<br>(Family: none) | 1-5,10-12,<br>16-23,28-30,<br>34-39,44-46,<br>50-52<br>6-9,13-15,<br>24-27,31-33,<br>40-43,47-49 |
| Y | JP 2005-347897 A (Toshiaki KABE),<br>15 December, 2005 (15.12.05),<br>Par. Nos. [0066] to [0068]<br>(Family: none) | 6,7,24,25,<br>40,41 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 June, 2007 (06.06.07) | 19 June, 2007 (19.06.07) |

| Name and mailing address of the ISA/<br>Japanese Patent Office | Authorized officer |
|---|---|
| Facsimile No. | Telephone No. |

Form PCT/ISA/210 (second sheet) (April 2005)

**INTERNATIONAL SEARCH REPORT**

International application No.

PCT/JP2007/060140

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-164549 A  (IBM Japan, Ltd.), 19 June, 1998 (19.06.98), Par. No. [0019] & US 6005936 A Column 4; lines 31 to 43 & EP 845758 A2 | 8,9,26,27, 42,43 |
| Y | JP 2006-24058 A  (Fuji Xerox Co., Ltd.), 25 January, 2006 (25.01.06), Par. Nos. [0054] to [0058] (Family: none) | 13-15,31-33, 47-49 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005196790 A